(19) **Europäisches Patentamt / European Patent Office / Office européen des brevets**

(11) **EP 4 046 390 B1**

(12) **FASCICULE DE BREVET EUROPEEN**

(45) Date de publication et mention
de la délivrance du brevet:
**02.10.2024 Bulletin 2024/40**

(21) Numéro de dépôt: **20796868.6**

(22) Date de dépôt: **05.10.2020**

(51) Classification Internationale des Brevets (IPC):
**H04R 1/40** *(2006.01)*  **H04R 3/00** *(2006.01)*
**G01S 3/802** *(2006.01)*  **G01S 5/28** *(2006.01)*

(52) Classification Coopérative des Brevets (CPC):
**H04R 3/005; G01S 3/8027; G01S 5/28;**
**H04R 1/406;** H04R 2201/401; H04R 2430/20

(86) Numéro de dépôt international:
**PCT/FR2020/051742**

(87) Numéro de publication internationale:
**WO 2021/074502 (22.04.2021 Gazette 2021/16)**

(54) **LOCALISATION PERFECTIONNEE D'UNE SOURCE ACOUSTIQUE**

VERBESSERTE ORTUNG EINER SCHALLQUELLE

IMPROVED LOCATION OF AN ACOUSTIC SOURCE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.10.2019 FR 1911723**

(43) Date de publication de la demande:
**24.08.2022 Bulletin 2022/34**

(73) Titulaire: **Orange**
**92130 Issy-les-Moulineaux (FR)**

(72) Inventeurs:
• **DANIEL, Jérome**
**92326 CHÂTILLON CEDEX (FR)**
• **KITIC, Srdan**
**92326 CHÂTILLON CEDEX (FR)**

(74) Mandataire: **Plasseraud IP**
**104 Rue de Richelieu**
**CS92104**
**75080 Paris Cedex 02 (FR)**

(56) Documents cités:
**US-A1- 2011 317 522**

• **PAULO FELISBERTO ET AL: "Experimental
Results of Underwater Cooperative Source
Localization Using a Single Acoustic Vector
Sensor", SENSORS, vol. 13, no. 7, 12 July 2013
(2013-07-12), pages 8856 - 8878, XP055701417,
DOI: 10.3390/s130708856**
• **TERVO SAKARI: "Direction estimation based on
sound intensity vectors", 2009 17TH EUROPEAN
SIGNAL PROCESSING CONFERENCE, IEEE, 24
August 2009 (2009-08-24), pages 700 - 704,
XP032759032, ISBN: 978-1-61738-876-7,
[retrieved on 20150401]**
• **WU KAI ET AL: "Multi-source direction-of-arrival
estimation in a reverberant environment using
single acoustic vector sensor", 2015 IEEE
INTERNATIONAL CONFERENCE ON
ACOUSTICS, SPEECH AND SIGNAL
PROCESSING (ICASSP), IEEE, 19 April 2015
(2015-04-19), pages 444 - 448, XP033186801, DOI:
10.1109/ICASSP.2015.7178008**

**Description**

La présente invention relève du domaine de la localisation de sources acoustiques, notamment pour l'estimation de direction acoustique ou « DoA » (Direction of Arrival) par un système microphonique compact (par exemple un microphone apte à capter des sons en représentation « ambiophonique » ou « ambisonique » ci-après).

Une application possible est par exemple la formation de voies ou (« beamforming », qui passe alors par une séparation spatiale de sources audio, afin notamment d'améliorer la reconnaissance de la parole (par exemple pour un assistant virtuel par interaction vocale). Un tel traitement peut aussi intervenir dans le codage audio 3D (pré-analyse d'une scène sonore pour coder des signaux principaux de façon individuelle), ou encore permettre l'édition spatiale de contenu sonore immersif éventuellement en audio-visuel (à vocation artistique, radiophonique, cinéma, etc.). Elle permet aussi le suivi de locuteur en téléconférence ou la détection d'événements sonores (avec ou sans vidéo associée).

Dans l'état de l'art qui s'intéresse aux encodages de type ambisonique (ou équivalents), l'essentiel des approches se base sur les composantes spatiales issues d'une analyse fréquentielle (une représentation temps-fréquence typiquement issue d'un traitement par transformée de Fourier à court terme ou « STFT », ou une représentation de signaux temporels à bande étroite issue d'un banc de filtres).

Les signaux ambisoniques à l'ordre 1 sont rassemblés sous forme vectorielle suivant l'équation Eq.1 donnée en ANNEXE ci-après. La convention d'encodage de Eq.1 est présentée ici par commodité mais sans restriction car les conversions avec d'autres conventions peuvent être implémentées tout aussi bien. Ainsi lorsque le champ est assimilable à une onde plane unique venant d'une direction décrite par le vecteur unitaire U1 (donc la direction DoA de la source) et portant le signal émis s1(t), on peut l'écrire selon l'équation Eq.2 (ANNEXE).

En pratique, les signaux sont analysés dans le domaine fréquentiel, trame après trame, ce qui donne l'expression Eq.3 (ANNEXE), et pour le cas d'une onde unique sous la forme Eq.4, et par extension pour N ondes sous la forme Eq.5.

Une catégorie de méthodes s'appuie sur l'analyse du vecteur vélocité V(f) ou du vecteur intensité I(f) (le premier étant une version alternative du second, normalisée par la puissance de la composante de référence omnidirectionnelle), comme exprimé en Eq.6 et Eq.7.

Les méthodes qui exploitent des échantillons fréquentiels complexes basent l'estimation de la localisation essentiellement sur l'information contenue dans la partie réelle de tels vecteurs (liée à l'intensité active et caractéristique de la propagation d'onde en ce qu'elle est directement liée au gradient du champ de phase).

La partie imaginaire (partie réactive associée au gradient d'énergie) est quant à elle considérée caractéristique de phénomènes acoustiques stationnaires.

On voit en effet que dans le cadre d'une onde plane seule, le vecteur vélocité se résume à V = U1.

La méthode connue (dite « DirAC ») opère soit sur des échantillons temporels filtrés en sous-bandes auquel cas ils sont réels et le vecteur intensité l'est aussi, soit sur des échantillons fréquentiels complexes auquel cas c'est la partie réelle du vecteur intensité qui est seule exploitée comme désignant la direction de provenance (ou plus précisément, son opposée). En complément, le calcul d'un coefficient dit de « diffuseness », lié au rapport entre norme du vecteur et l'énergie du champ sonore, permet de décider si l'information disponible à la fréquence considérée est plutôt caractéristique de composantes directionnelles (auquel cas la direction du vecteur détermine la localisation) ou bien d'une « ambiance » (champ issu de réverbération diffuse et/ou d'un mélange de sources sonores secondaires indifférenciées).

Une autre méthode notée ci-après « VVM » s'appuie sur le vecteur vélocité et les statistiques de la direction angulaire de sa partie réelle, pondérée par certains facteurs liés au ratio entre parties réelles et imaginaires et leurs normes. Une cartographie sphérique (histogramme 2D, par exemple équi-rectangulaire) est établie par collecte de valeurs sur l'ensemble des échantillons fréquentiels et sur un certain nombre de trames temporelles. L'estimation se fonde donc essentiellement sur un maximum de probabilité et est soumise à une certaine latence.

Une autre catégorie de méthodes dite de la « covariance », présentée parfois comme une extension de la première, met en jeu le calcul d'une matrice de covariance des composantes spatiales (également parfois nommée matrice de Densité Spectrale de Puissance ou « PSD ») par sous-bandes fréquentielles. Là encore, la partie imaginaire est parfois totalement ignorée. Il faut noter que la première ligne (ou première colonne) de cette matrice est équivalente au vecteur intensité lorsque les composantes spatiales sont de type ambisonique. Bon nombre de ces approches font intervenir des méthodes « sous-espaces » et des algorithmes parfois coûteux surtout lorsqu'ils travaillent sur une quantité importante de sous-bandes fréquentielles, et lorsqu'ils exploitent des résolutions spatiales plus élevées.

Ces méthodes « basées vecteur » ou « basées matrice » s'attachent à discerner les composantes « directionnelles » associées à des sources ou chemins acoustiques localisables, d'une part, de composantes d'ambiance, d'autre part.

Parmi les limites observées de telles méthodes, elles sont gênées par l'interférence du son direct (qui indique la direction de la source acoustique) avec les réflexions, même dans le cas d'une unique source acoustique simultanément active. Au-delà d'un certain degré de présence d'un effet de salle par exemple, elles ne peuvent pas donner une estimation raisonnable assez souvent et/ou l'estimation est trop souvent biaisée. Lorsque l'objet comprenant le dispositif de captation (microphone ambisonique par exemple) et de localisation acoustique est placé par exemple sur une table ou près d'un mur (et/ou si c'est le cas de la source acoustique), de telles surfaces de réflexion ont tendance à induire un biais angulaire systématique.

En effet, la localisation est en général biaisée par l'interférence systématique du son direct avec des réflexions associées à la même source acoustique. Lorsqu'elle est basée sur le vecteur vélocité, c'est la partie réelle du vecteur vélocité qui est essentiellement considérée cependant que la partie imaginaire est habituellement ignorée (ou tout au moins sous utilisée). Les réflexions acoustiques, considérées comme gênantes, ne sont pas intégrées dans la problématique d'estimation. Elles restent donc une composante ignorée, non modélisée, sans prendre en compte les structures d'interférence particulières induites.

Ainsi, pour des applications du type précité, la localisation acoustique est en général estimée en termes seulement angulaires. D'ailleurs, aucune approche efficace ne semble proposer une évaluation de distance à partir d'un seul point de captation (considéré comme unique pour un système microphonique coïncident ou plus généralement « compact », c'est-à-dire contenu dans un volume de dimension petite par rapport aux distances des sources acoustiques, soit typiquement de l'ordre de la dizaine de centimètres pour un microphone ambisonique).

Pourtant, certains contextes applicatifs requièrent l'information additionnelle de distance de la source en plus de sa direction (donc une localisation 3D en XYZ). Ce sont par exemple :

- la navigation virtuelle dans des environnements réels captés en 3D (car la modification appropriée de l'angle et l'intensité d'une source dépend de la translation XYZ relative entre cet objet et le microphone),
- la localisation de sources pour identifier des locuteurs (notamment pour une enceinte connectée ou autre),
- la surveillance, les dispositifs d'alerte dans des environnements domestique ou industriel, ou autres. Une méthode de localisation de source acoustique sous-marine depuis un seul point de captation à partir d'un vecteur vélocité exprimé dans le domaine temporel est proposé dans l'article de Felisberto et al: "Experimental Results of Underwater Cooperative Source Localization Using a Single Acoustic Vector Sensor", SENSORS, vol. 13, no. 7, 12 juillet 2013.

L'invention vient améliorer la situation.

Il est proposé un procédé de traitement de signaux sonores selon la revendication 1.

Ainsi, il est proposé de modéliser l'interférence entre l'onde directe et au moins une onde indirecte (issue de réflexion) et exploiter les manifestations de ce modèle sur l'intégralité du vecteur vélocité (sur sa partie imaginaire comme sur sa partie réelle).

Dans une forme de réalisation, les signaux sonores sont acquis par un microphone de type ambisonique et le vecteur vélocité V(f) dans le domaine fréquentiel est exprimé par des composantes ambisoniques d'ordre 1 sous une forme de type :

$$V(f) = 1/W(f) \, [X(f), \, Y(f), \, Z(f)]^{\mathsf{T}}.$$

L'ordre considéré est ici de 1, ce qui permet d'exprimer les composantes du vecteur vélocité dans un repère tridimensionnel, mais d'autres réalisations sont possibles avec notamment un ordre ambisonique plus élevé.

Selon l'invention, la direction du trajet direct est déterminée par le premier vecteur U0 à partir d'une moyenne sur un ensemble de fréquences de la partie réelle du vecteur vélocité V(f) exprimé dans le domaine fréquentiel (Eq.24 de l'ANNEXE présentée à la fin de la présente description).

Ainsi, déjà l'expression du vecteur vélocité dans le domaine fréquentiel permet de donner le vecteur U0.

Dans une réalisation plus avancée toutefois :

- On applique une transformée inverse, des fréquences vers le temps, au vecteur vélocité pour l'exprimer dans le domaine temporel V(t),
- On recherche au moins un maximum V(t)max dans l'expression du vecteur vélocité en fonction du temps, après une durée du trajet direct, et
- On en déduit le premier retard TAU1, correspondant au temps donnant le maximum V(t)max.

Dans cette réalisation :

- On peut estimer aussi le deuxième vecteur U1 en fonction du premier vecteur U0 et en fonction du maximum V(t)max, par une relation du type :

$$U1 = U0 - 2 \, (U0 \, . \, V(t)max) \, V(t)max \, / \, \| \, V(t)max \, \|^2$$

Ensuite :

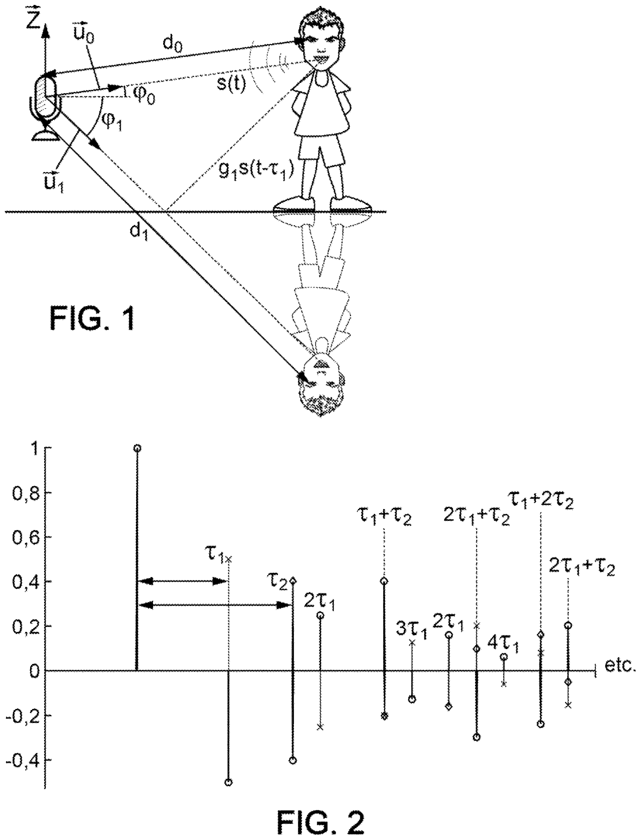

- On peut déterminer des angles respectifs PHI0 et PHI1 du premier vecteur U0 et du deuxième vecteur U1, par rapport à ladite paroi (figure 1), tels que :
  PHI0=arcsin(U0.$n_R$) et PHI1=arcsin(U1.$n_R$), où $n_R$ est un vecteur unitaire et normal à la paroi, et
- La distance dû entre la source et le microphone est déterminée en fonction du premier retard TAU1 par une relation du type :

$$d0 = (TAU1 \times C)/((cosPHI0/cosPHI1)-1),$$

où C est la vitesse du son.

En outre, la distance z0 de la source à ladite paroi peut être déterminée par une relation du type :

$$z0 = d0 \, (sinPHI0 - sinPHI1) \, / \, 2$$

On peut ainsi déterminer tous les paramètres pertinents quant à la localisation de la source (de la figure 1 par exemple), ici dans le cas où une seule paroi est présente, mais ce modèle peut être généralisé à la présence de plusieurs parois.

Ainsi dans une réalisation où l'espace comprend une pluralité de parois :

- On applique une transformée inverse, des fréquences vers le temps, au vecteur vélocité pour l'exprimer dans le domaine temporel V(t) sous la forme d'une succession de pics (Eq.39, FIG.2),
- On identifie, dans la succession de pics, des pics liés à une réflexion sur une paroi de ladite pluralité de parois, chaque pic identifié ayant une abscisse temporelle fonction d'un premier retard TAUn du trajet acoustique issu de la réflexion sur la paroi n correspondante, par rapport au trajet direct,
- En fonction de chaque premier retard TAUn, du premier vecteur U0 et de chaque deuxième vecteur Un représentant un trajet acoustique issu d'une réflexion sur une paroi n, on détermine au moins un paramètre parmi :

  * la direction (DoA) du trajet direct,
  * la distance dû de la source au microphone, et
  * au moins une distance zn de la source à la paroi n.

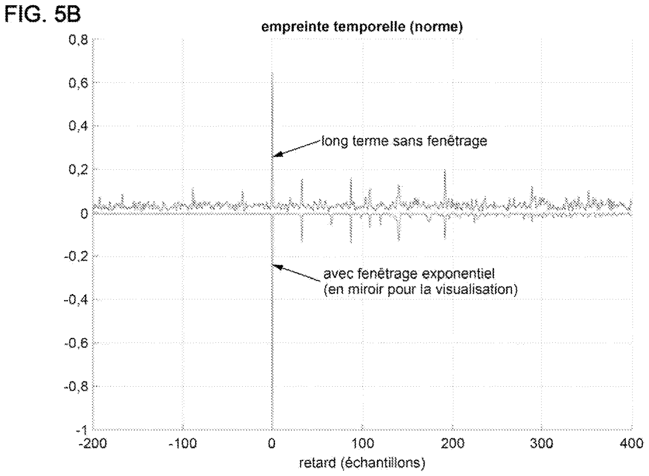

Comme on peut l'observer sur la figure 5B par exemple, l'expression du vecteur vélocité après transformée inverse (fréquences vers temps) présente une succession de pics, laquelle est illustrée aussi sur la figure 2 à titre didactique, où des maximas sont atteints pour des valeurs multiples des retards précités (TAU1, 2TAU1, etc. ; TAU2, 2TAU2, etc.) entre le trajet direct et les trajets issus d'au moins une réflexion sur une paroi, ainsi que pour des combinaisons de ces retards (TAU1+TAU2, 2TAU1+TAU2, TAU1+2TAU2, etc.).

On peut alors exploiter ces pics pour identifier en particulier les pics liés au moins à une réflexion sur une paroi n et qui ont donc des abscisses temporelles multiples (x1, x2, x3, etc.) du retard TAUn associé à cette paroi n.

Comme les combinaisons de retards différents peuvent complexifier l'identification des retards simples (TAU1, TAU2, TAU3, etc.) et la présence de parois associées, on peut présélectionner une première partie de pics à des abscisses temporelles positives les plus petites, pour identifier dans cette partie les pics associés chacun à une réflexion sur une paroi (sans avoir ainsi la combinaison de retards différents TAU1+TAU2, 2TAU1+TAU2, TAU1+2TAU2, etc. qui peut apparaître après les premiers pics).

Dans une réalisation, les signaux acquis étant délivrés sous forme de trames successives d'échantillons :

- Pour chaque trame, on peut estimer un score de présence d'une attaque sonore dans la trame, et
- On peut sélectionner les trames à scores supérieurs à un seuil pour la détermination dudit au moins un paramètre.

En effet, dans une approche où l'on cherche en premier lieu les premières réflexions immédiates des parois, il peut être préférable de rechercher la réaction immédiate des parois de la salle à une attaque sonore (début d'émission d'un son).

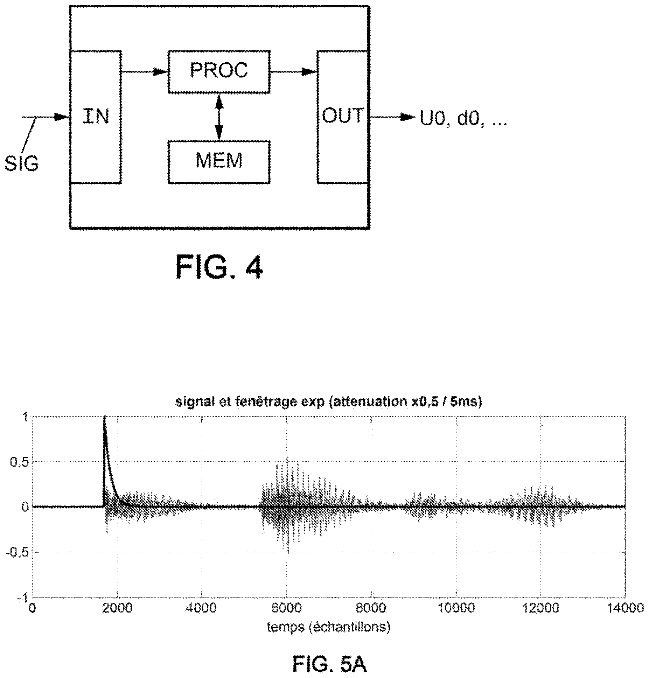

Dans une réalisation, les signaux acquis par le microphone se présentant sous la forme d'une succession d'échantillons, on peut appliquer auxdits échantillons une fenêtre de pondération à variation exponentielle décroissante dans le temps (FIG.5A).

Eventuellement en complément, on peut placer cette fenêtre en tout début d'attaque sonore (voire juste avant le début d'attaque). On évite ainsi la gêne des réflexions multiples.

L'application d'une telle fenêtre de pondération permet une estimation moins biaisée des paramètres U0, d0, etc. issus de l'exploitation de l'expression du vecteur vélocité dans le domaine temporel. En effet, dans certaines situations où la magnitude cumulée des réflexions est plus grande pour que celle du son direct, l'estimation des paramètres précités peut être biaisée. Ces situations peuvent être détectées lorsqu'il est observé des pics à des abscisses temporelles négatives (courbe en haut de la figure 5B) dans l'expression temporelle du vecteur vélocité. L'application d'une fenêtre de pondération du type précité permet de ramener ces pics à des abscisses positives comme illustré par la courbe du bas de la figure 5B, et de donner des estimations moins biaisées.

Dans une réalisation, on peut en outre appliquer itérativement une pondération q(f), associée chacune à une bande de fréquences f, au vecteur vélocité V(f) dans le domaine fréquentiel selon une expression du type (Eq.49):

$$q(f) = \exp\left(- |Im(V(f)).m| / (\|\, Im(V(f)) \,\|)\right),$$

où Im(V(f)) est la partie imaginaire du vecteur vélocité, complexe, et m est un vecteur unitaire normal au plan défini par le vecteur U0 et une normale à la paroi (typiquement l'axe Z de la figure 1 commentée en détail plus loin).

Une telle réalisation permet de sélectionner les bandes de fréquences les plus exploitables pour la détermination des paramètres précités.

La présente invention vise aussi un dispositif de traitement de signaux sonores, comportant un circuit de traitement pour la mise en oeuvre du procédé selon l'une des revendications précédentes.

A titre illustratif, la figure 4 présente schématiquement un tel circuit de traitement pouvant comporter alors :

- une interface d'entrée IN pour recevoir des signaux SIG acquis par le microphone (pouvant comporter plusieurs pastilles piézoélectriques pour composer ces signaux, par exemple en contexte ambisonique),
- un processeur PROC coopérant avec une mémoire de travail MEM pour traiter ces signaux notamment pour élaborer l'expression du vecteur vélocité afin d'en tirer les paramètres souhaités d0, U0, etc., dont des valeurs peuvent être délivrées par l'interface de sortie OUT.

Un tel dispositif peut se présenter sous la forme d'un module de localisation d'une source sonore dans un environnement 3D, ce module étant connecté à un microphone (type antenne sonore, ou autre). Inversement, il peut s'agir d'un moteur de rendu sonore en fonction d'une position donnée d'une source dans un espace virtuel (comportant une ou plusieurs parois) en réalité augmentée.

La présente invention vise aussi un programme informatique comportant des instructions pour la mise en oeuvre du procédé ci-avant, lorsque ces instructions sont exécutées par un processeur d'un circuit de traitement.

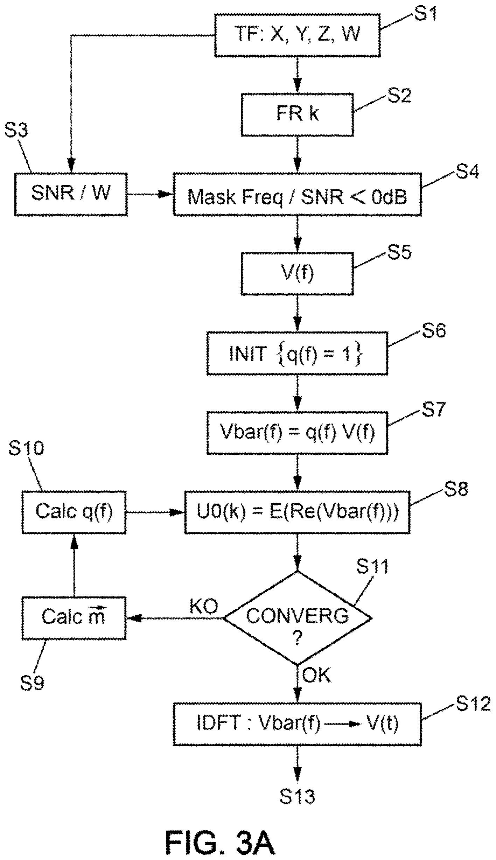

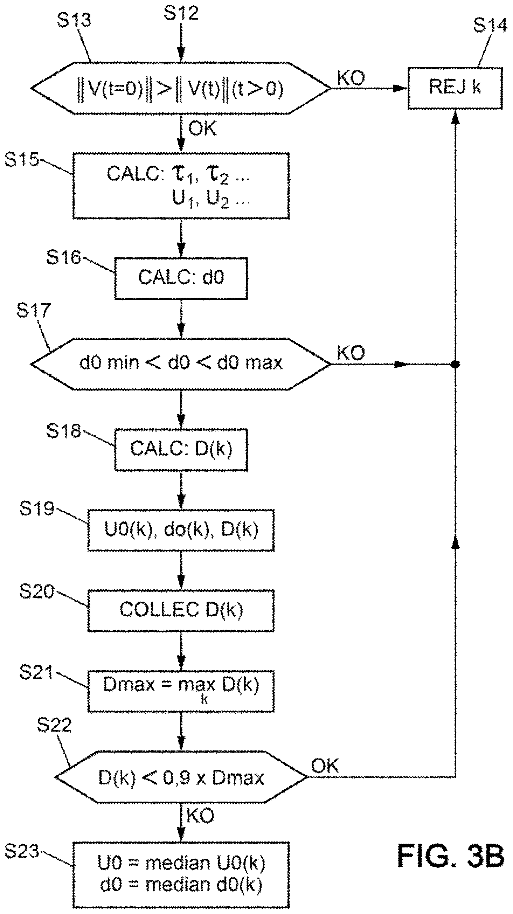

Les figures 3A et 3B illustrent un exemple d'ordinogramme de l'algorithme d'un tel programme.

Selon un autre aspect, il est proposé un support d'enregistrement non transitoire, lisible par un ordinateur, sur lequel est enregistré un tel programme.

D'autres caractéristiques, détails et avantages apparaîtront à la lecture de la description détaillée ci-après, et à l'analyse des dessins annexés, sur lesquels :

La figure 1 [Fig. 1] montre à titre illustratif différents paramètres intervenant pour une localisation d'une source sonore selon un mode de réalisation.

La figure 2 [Fig. 2] montre à titre illustratif les différents pics successifs que présente l'expression temporelle d'un vecteur vélocité après sa transformée inverse des fréquences vers le temps (« IDFT »).

La figure 3A [Fig. 3A] montre les étapes de début d'un traitement algorithmique pour déterminer les paramètres pertinent U0, d0, etc.,

Et la figure 3B [Fig. 3B] montre la suite des étapes du traitement de la figure 3A.

La figure 4 [Fig. 4] montre schématiquement un dispositif au sens de l'invention selon un mode de réalisation.

La figure 5A [Fig. 5A] montre une fenêtre de pondération des échantillons des signaux acquis, exponentiellement décroissante dans le temps, selon un mode de réalisation.

La figure 5B [Fig. 5B] compare une expression temporelle après IDFT du vecteur vélocité :

- sans traitement préalable des échantillons par la fenêtre de pondération (courbe du haut),
- et avec traitement par la fenêtre (courbe du bas).

Le vecteur vélocité peut être calculé de façon connue en soi. Quelques paramétrages particuliers peuvent être recommandés toutefois pour l'amélioration des résultats finaux obtenus.

Habituellement, des spectres fréquentiels B(f) de signaux ambisoniques sont d'abord obtenus typiquement par Transformée de Fourier à Court Terme (ou STFT pour « Short Term Fourier Transform ») pour une succession de trames temporelles b(t), en général chevauchantes (avec addition/recouvrement par exemple). Ici, l'ordre des composantes ambisoniques peut être m=1 pour quatre composantes (sans perte de généralité toutefois, les calculs pouvant s'adapter à des ordres plus élevés).

Alors, pour chacune des trames temporelles, un vecteur vélocité est calculé ensuite pour l'ensemble des échantillons fréquentiels comme ratio des composantes directionnelles X(f), Y(f) et Z(f) sur la composante omnidirectionnelle W(f) (équation Eq.6 de l'ANNEXE). On peut envisager des réalisations introduisant en outre un lissage temporel ou une consolidation par somme pondérée, comme décrit plus loin.

Avec un tel ratio (X(f)/W(f), Y(f)/W(f), Z(f)/W(f)), on fait disparaître substantiellement la caractéristique du signal source pour mettre en évidence les caractéristiques du canal acoustique, si tant est que la composition spectrale du signal audio excite une quantité substantielle de fréquences utiles (par exemple sur une large bande de fréquences).

Dans les applications présentées précédemment, on peut considérer la situation d'une source acoustique aux caractéristiques stables (en position et en rayonnement, au moins sur quelques trames consécutives) émettant un signal s(t), dans un environnement acoustique stable (parois et objets réfléchissants, éventuellement diffractant, etc., donc responsables de ce qu'on désigne usuellement par « effet de salle » même si l'on peut se trouver en dehors d'une « salle »). Ces signaux sont captés par un microphone de type ambisonique. Les signaux ambisoniques **b**(t) résultent de l'encodage spatial combiné de différentes versions du signal s(t) selon ses trajets direct et indirects, ce que l'on nomme « effet du canal acoustique ». Cela se traduit par la convolution du signal par une réponse impulsionnelle spatiale **h**(t) dont chaque canal (ou dimension) est associé à une composante ambisonique, comme exprimé dans l'équation Eq.8 de l'ANNEXE.

Cette réponse impulsionnelle est nommée SRIR pour « *Spatial Room Impulse Response* » et se représente généralement comme une série de pics temporels :

- le premier pic, situé au temps t=TAU0 (temps de propagation), correspondant au son direct,
- le deuxième pic, à t=TAU1 correspond à une première réflexion,
  etc.

Ainsi on doit pouvoir lire dans ces pics la direction de provenance de ces fronts d'onde, avec en première approximation l'expression du vecteur $u_n$ donné dans l'équation Eq.9-1. En pratique, la réponse impulsionnelle spatiale est une donnée inconnue, mais il est exposé ici comment remonter indirectement à certaines de ses caractéristiques, à travers le vecteur vélocité, calculé sur la base du signal ambisonique **b**(t).

Pour le mettre en évidence, on décrit d'abord le lien entre la réponse impulsionnelle **h**(t), le signal émis s(t), et les signaux ambisoniques **b**(t) (Eq.9-2) sur un intervalle temporel observé, choisi. Pour être exacte, cette expression suppose une absence de tout bruit de mesure et d'autres sources acoustiques dont le signal serait capté directement ou indirectement sur l'intervalle temporel considéré. Ainsi, tout le signal direct et indirect de la source est capté sur cet intervalle temporel.

On montre qu'en opérant une Transformée de Fourier sur tout cet intervalle temporel, le vecteur vélocité qui en découle est uniquement caractéristique de la réponse impulsionnelle spatiale. Cette transformée dite LT (car « plus long terme » qu'une STFT) convertit b(t), s(t) et h(t) en B(f), S(f) et H(f) selon l'équation Eq.10. Ce support temporel peut correspondre à une fenêtre temporelle s'étendant sur plusieurs trames de signal consécutives.

On déduit alors, de l'expression de la convolution dans le domaine des fréquences, celle du vecteur vélocité, calculé à l'équation Eq.11. Cette expression Eq.11 devient caractéristique du canal acoustique (autrement dit, de l'effet de salle) et non plus du signal émis, pour peu que celui-ci présente une énergie non-nulle (en pratique, détectable) pour chaque fréquence f, sur la période temporelle considérée.

En pratique et comme il a été évoqué, une modalité fréquente est de procéder à une analyse temps-fréquence par trame, où chaque Transformée de Fourier à Court Terme s'applique à un fenêtrage temporel qui ne vérifie pas a priori que le signal observé résulte entièrement et seulement d'un produit de convolution de l'équation Eq.9. Cela fait qu'au sens strict, le vecteur vélocité ne peut pas s'écrire sous une forme qui ne caractérise que le canal acoustique (comme la partie droite de l'équation Eq.11). Cependant il en est fait ici autant que possible l'approximation (équation Eq.20 introduite plus loin) dans le cadre de cette description, tout en exploitant des avantages de l'analyse à court terme présentée ci-après.

On cherche à des étapes ultérieures une succession de pics d'énergie qui caractérisent d'une part le trajet direct du signal émis depuis la source et reçu par le microphone, puis les premières réflexions sur une ou plusieurs parois, tant que ces réflexions sont identifiables. On peut se concentrer alors sur ce qui est caractéristique du début de la réponse impulsionnelle spatiale, à savoir en premier lieu le premier pic temporel, dont on déduit la direction du son direct, et éventuellement les pics temporels suivants, caractéristiques des premières réflexions.

Pour ce faire, on inspecte l'effet d'une interférence entre le son direct et au moins une réflexion, sur l'expression du vecteur vélocité complexe, de façon à estimer des paramètres pertinents pour définir la position de la source sonore.

On introduit un modèle simplifié d'un trajet direct (n=0) combiné à N réflexions spéculaires (n=1 ,...,N) pour le début de la réponse impulsionnelle comme présenté dans l'équation Eq.12., où $g_n$ , $TAU_n$, et $u_n$, sont respectivement l'atténuation, le retard et la direction de provenance de l'onde d'indice n (nième réflexion) arrivant au système microphonique. Dans la suite, pour des raisons de simplification mais sans restriction de généralité, on considère des retards et atténuation relatifs au son direct, ce qui revient à poser les termes de l'équation Eq.13 pour n=0.

L'expression fréquentielle correspondante est donnée à l'équation Eq.14, avec le cas particulier de $gamma_0$ = 1 pour le son direct. Bien entendu, la variable $gamma_n$, quel que soit n supérieur à 0, est fonction de la fréquence f.

Il s'en suit l'expression fréquentielle du champ ambisonique, si on néglige la partie plus tardive, donnée par l'expression Eq.16.

Le vecteur vélocité à court-terme s'exprime alors par l'équation Eq.17, ou encore par l'équation Eq.18 selon une version régularisée avec un terme EPSILON non nul de façon à éviter des valeurs (quasi) infinies lorsque W est (presque) nul.

L'analyse à court-terme permet d'observer, au cours du temps et selon l'évolution dynamique du signal source, des empreintes fréquentielles (notées « FDVV » ci-après), caractéristiques de sous-mélanges de fronts d'onde au sein de la réponse impulsionnelle spatiale. Un sous-mélange caractéristique (smx pour « submix »), pour une observation donnée, est modélisé selon Eq.19, dans les domaines temporel et fréquentiel.

Dans l'approche décrite ci-après, on s'attache à caractériser l'empreinte fréquentielle FDVV comme découlant d'un modèle implicite de sous-mélange $\mathbf{H}^{smx}$ par l'approximation exprimée en Eq.20 (qui n'est en générale pas une égalité exacte sauf situations particulières).

En particulier à des instants d'attaque du signal, le modèle implicite $\mathbf{h}^{smx}$ (t) s'apparente plausiblement au début de la réponse impulsionnelle spatiale $\mathbf{h}^{early}$ (t) au moins en termes de directions et retards relatifs de fronts d'onde. Les paramètres implicites de gains relatifs $g_n$ étant quant à eux impactés par le fenêtrage temporel et les caractéristiques dynamiques du signal, ils ne se présentent pas nécessairement comme conformes à ceux de la réponse impulsionnelle. S'intéressant ici prioritairement à l'onde directe (qui fournit la DoA) et à une ou quelques réflexions précoces, il est considéré essentiellement les situations où l'observation en est caractéristique.

A des fins d'illustration notamment, il est exposé ci-après un exemple de traitement ne tenant en compte qu'une seule réflexion avec estimation dans le domaine fréquentiel. On traite ici le cas d'une interférence simple (essentiellement entre le son direct et une première réflexion), et on montre comment déterminer les paramètres cherchés en mettant en lumière une structure spatio-fréquentielle particulière, en regardant non seulement la partie réelle mais aussi la partie imaginaire du vecteur vélocité. En effet, le champ ambisonique s'écrit selon Eq.21, et on en déduit le vecteur vélocité selon Eq.22. Il découle de cette expression que les parties réelles et imaginaires parcourent des segments parallèles dans l'espace 3D (respectivement affine et linéaire) lorsque les fréquences parcourent le spectre audio considéré comme présenté dans Eq.23. Le segment affine (partie réelle) est sur une droite contenant les vecteurs unitaires U0 et U1 pointant vers les ondes respectivement directe et indirecte, et les deux segments sont orthogonaux au plan médian de ces deux vecteurs (et donc la partie imaginaire du vecteur l'est toujours elle-même puisqu'elle se trouve sur le segment linéaire). Par ailleurs, en supposant une distribution homogène des déphasages entre les ondes (donc un balayage représentatif des fréquences), selon un calcul de statistiques, la moyenne de la partie réelle du vecteur vélocité est égale au vecteur U0 comme exprimé en Eq.24 et le maximum de probabilité est une moyenne de U0 et U1 pondérée par l'amplitude respective des ondes comme exprimé en Eq.25. Les détections de DoA basées sur un maximum de probabilité sont donc entachées d'un biais angulaire systématique, donnant une direction intermédiaire entre le son direct et sa direction. Les équations Eq.23 montrent que ce balayage spatial se fait avec une périodicité fréquentielle égale à l'inverse du retard TAU1 entre les deux ondes. Il est donc possible d'extraire les directions U0 et U1 ainsi que le retard TAU1 à partir des observations, lorsque de telles structures spatio-fréquentielles peuvent être observées. Il est présenté plus loin une autre réalisation d'estimation de ces paramètres dans le domaine temporel (description en lien avec la figure 2).

En disposant d'un a priori sur l'orientation de la surface de réflexion par rapport au repère du microphone, on peut alors déduire de l'estimation de U0, U1, TAU1, l'information de distance absolue d de la source par rapport au microphone, et éventuellement l'altitude des deux. En effet, en notant d0 la distance de la source S0 au microphone M, et d1 celle de son image-miroir S1 par rapport à la surface de réflexion R comme illustré sur la **figure 1,** la surface R est orthogonale au plan formé par les vecteurs U0 et U1. Les trois points (M,S0,S1) sont dans un même plan orthogonal à la surface R. Il reste à définir un paramètre à déterminer pour définir l'orientation (ou inclinaison) du plan de réflexion. Dans le cas d'une réflexion par le sol ou le plafond (détectée ainsi parce que U1 pointe vers le sol ou le plafond), on peut exploiter l'hypothèse que celui-ci est horizontal et parallèle au plan X-Y du repère du microphone ambisonique. Alors les distances d0 et d1 sont liées par la relation Eq.26, laquelle donne d'ailleurs directement la distance du microphone M à l'axe (S0,S1), PHI0 et PHI1 étant les angles d'élévation respectifs des vecteurs U0 et U1.

On a en outre une estimation du retard TAU1 du son réfléchi relativement au son direct, ce qui permet d'accéder à une autre relation Eq.27 entre les distances, puisque que leur différence traduit le retard de trajet acoustique, avec un facteur c qui est la vitesse du son.

En exprimant d1 en fonction de d0, cette dernière quantité devient la seule inconnue, qui peut être estimée selon Eq.28. On obtient également la distance de la source au plan de réflexion, c'est-à-dire sa hauteur ou altitude z0 par rapport au sol selon Eq.29, ainsi que celle du microphone en Eq.30.

Les différents paramètres U0, U1, PHI0, PHI1, d1, d0, etc. sont illustrés sur la figure 1 dans l'exemple d'une réflexion sur un sol. Bien entendu, des paramètres similaires peuvent être déduits quant à une réflexion sur un plafond. De la même manière, des paramètres similaires peuvent être déduits quant à une réflexion sur toute autre surface de réflexion R dont l'orientation par rapport au référentiel du microphone est connue, orientation que l'on caractérise par la normale $n_R$ (vecteur unitaire orthogonal à la surface R). Il suffit de redéfinir les angles PHI0 et PHI1 par rapport à la surface réfléchissante R, de façon générale en tant que PHI0=arcsin(U0.$n_R$) et PHI1=arcsin(U1.$n_R$). On peut ainsi déterminer par le vecteur U1 associé à chaque cas de réflexion des positions respectives de ces obstacles, pour des applications de réalité augmentée ou en robotique pour une estimation de localisation par détection acoustique.

Dans les cas où l'orientation $n_R$ de la surface de réflexion n'est pas connue a priori, il est possible de l'estimer complètement si l'on dispose, par des observations à différents moments, d'estimations des paramètres de front d'onde associées à au moins deux positions de source, pour lesquelles on détecte une réflexion par ce même plan de réflexion. On dispose ainsi d'un premier jeu de paramètres (U0, U1, TAU1) et d'au moins un deuxième (U0', U1', TAU1'). Comme U0 et U1 définissent un plan orthogonal au plan R, leur produit vectoriel définit un axe de ce plan R, et il en est de même d'un produit vectoriel tiré de U0' et U'1.

Ces produits vectoriels respectifs (non-colinéaires) définissent à eux deux l'orientation du plan R.

Toutefois, une limitation du modèle à seulement deux ondes interférentes (un son direct et une onde réfléchie) est cependant qu'il peut être difficile de discriminer les différentes premières réflexions sur les cloisons. Par ailleurs, le comportement spatio-fréquentiel du vecteur vélocité se complexifie rapidement lorsque des réflexions supplémentaires sont introduites. En effet, le parcours des parties réelles et imaginaires se combinent alors, et de façon non triviale, suivant plusieurs axes :

- dans des plans parallèles pour une onde directe et deux réflexions,
- ou dans tout l'espace en général.

Ces distributions spatio-fréquentielle complexes rendent trop fastidieuse la détermination des paramètres du modèle lorsque plusieurs surfaces de réflexion sont à considérer.

Une solution à ce problème consiste à opérer une analyse temps-fréquence plus sélective temporellement (c'est-à-dire avec des fenêtres temporelles plus courtes) pour avoir la chance de voir se manifester un mélange acoustique plus simple lors des attaques d'amplitude (transitoires, montée du signal), c'est-à-dire réduire le nombre de réflexions interférant avec le son direct dans le mélange présent dans la trame en question. Cependant dans certaines situations, les retards associés aux réflexions successives peuvent être trop proches les uns des autres pour isoler l'effet de la première réflexion dans son interférence avec le son direct.

Il est proposé alors ci-après un traitement permettant de séparer facilement les effets de multiples interférences et de caractériser celles-ci. Une première étape consiste à convertir l'empreinte du vecteur vélocité dans le domaine temporel (ou « TDVV », pour "Time-Domain Velocity Vector"), au moyen d'une Transformée de Fourier Inverse comme présenté en Eq.31. Cela a pour effet de condenser les effets de cyclicité fréquentielle associée à certains axes et qui se manifestent en de complexes pérégrinations du vecteur vélocité, en des données plus parcimonieuses et donc plus facilement analysables. En effet une telle conversion fait apparaître des séries de pics à intervalles temporels réguliers, pics dont les plus importants sont facilement détectables et extractibles (voir par exemple la figure 5B).

Une propriété remarquable est que par construction (du fait de la Transformée de Fourier inverse) le vecteur en t=0 est égal à la moyenne du vecteur vélocité dans le domaine fréquentiel (moyenne de sa partie réelle si on ne considère que le demi-spectre des fréquences positives). Une telle observation est pertinente pour l'estimation de la DoA principale U0.

Repartant du modèle fréquentiel du vecteur vélocité pour deux ondes interférences (son direct et une réflexion), on peut reformuler utilement le dénominateur grâce au développement de Taylor de l'Eq.32. Avec les conditions sur x et gamma1 données dans l'Eq.32, on arrive à l'expression Eq.33 du vecteur vélocité, et sous condition que la réflexion est d'amplitude moindre que le son direct (g1<g0=1, ce qui est le cas en général pour des débuts d'attaque du son), la Transformée de Fourier inverse de cette expression converge et se formule comme exprimé dans l'équation Eq.34, où l'on identifie un premier pic en t=0 qui donne U0 (la direction du son direct), puis une série de pics caractéristiques de l'interférence de la réflexion avec le son direct.

Ces pics sont placés en des instants t=kTAU1 multiples (entiers non nuls k>0) du retard TAU1, et sont d'amplitude exponentiellement décroissante en norme (selon le gain g1). Ils sont associés tous à des directions colinéaires à la différence U0-U1, donc orthogonales au plan médian entre ces deux vecteurs, et de direction (signe) alternante. L'avantage d'avoir converti le vecteur vélocité dans le domaine temporel est la présentation de façon parcimonieuse et quasi-immédiate des paramètres recherchés (figure 2).

Ainsi, il est possible de déterminer, outre la DoA principale U0 :

- le retard TAU1, possiblement pour plusieurs parois distinctes,
- puis un vecteur colinéaire à UO-U1 que l'on normalise en un vecteur unitaire n, dont on peut se servir, avec l'équation Eq.41 par exemple, pour
- déduire U1 comme étant le symétrique de U0 par rapport à leur plan médian, et
- optionnellement, le paramètre d'atténuation g1 (celui-ci étant susceptible d'être modifié par les paramètres d'analyse temps-fréquence, en particulier par la forme d'une fenêtre d'analyse et par son placement temporel relativement aux événements acoustiques observés. L'estimation de ce paramètre est donc de moindre utilité dans les contextes d'application visés ici).

L'observation des pics temporels suivants permet de vérifier s'ils sont sensiblement conformes à la même série (retards multiples TAU1, retards multiples TAU2, etc.) et donc caractéristiques de la même interférence, sans quoi il faut par exemple déterminer la présence de multiples réflexions.

On distingue ci-après un cas à « conditions favorables » où, dans le cas de N réflexions, on applique le développement de Taylor pour donner le vecteur vélocité selon Eq.35, sous condition que la somme sur N des gammas à l'équation Eq.35 reste inférieure à 1. La série de Taylor, qui traduit le dénominateur dans l'expression initiale, peut se réécrire en utilisant la loi multinomiale de l'équation Eq.36, ce qui permet de réorganiser l'expression du modèle de vecteur vélocité V en somme de plusieurs séries, avec des « séries croisées » représentées par le terme SC de Eq.37.

Sous la condition Eq.38 pour toute fréquence f, on en déduit par Transformée de Fourier inverse la série temporelle suivante Eq.39, avec des séries à retards combinés SARC. On identifie un premier pic en t=0 qui donne U0 (la direction du son direct), puis pour chaque réflexion une série de pics caractéristiques de l'interférence de cette réflexion avec le son direct. Sur la figure 2 par exemple, ces pics sont placés à des abscisses temporelles positives successives, TAU, 2TAU, 3TAU, etc., multiples du retard TAU entre la réflexion sur une paroi et le trajet direct.

Il apparait ensuite (pour des abscisses temporelles plus grandes) des séries caractéristiques d'interférences entre plusieurs réflexions sur plusieurs parois et le son direct, dont les retards sont d'autres combinaisons (avec facteurs entiers positifs) de leurs différents retards.

En effet, la **Figure 2** illustre une telle série dans le cas simplifié de deux réflexions interférant avec un son direct. Chaque marqueur (respectivement rond, croix, losange) indique par son ordonnée la contribution des vecteurs U0, U1, U2 (caractéristiques du son direct, d'une première réflexion et d'une deuxième réflexion respectivement) à l'empreinte temporelle TDVV en fonction des abscisses temporelles. On voit ainsi que la réception du son direct est caractérisée par le premier pic au temps zéro et d'amplitude 1, illustrée par un rond. L'interférence d'une première réflexion (retard TAU1) avec le trajet direct occasionne une première série de pics en TAU1, 2xTAU1, 3xTAU1, etc., qui sont marqués ici par une croix à une extrémité et un rond à l'autre extrémité (haut-bas). L'interférence d'une deuxième réflexion (retard TAU2) avec le trajet direct occasionne une deuxième série de pics en TAU2, 2xTAU2, 3xTAU2, etc., marqués ici par un losange à une extrémité et un rond à l'autre extrémité. Intervient ensuite un élément des « séries croisées », c'est-à-dire les interférences entre les réflexions (premier retard : TAU1+TAU2, puis 2TAU1+TAU2, puis TAU1+2TAU2, etc.). Ces séries croisées, dont l'expression est accessible mais longue à écrire dans un cas général, ne sont pas explicitées ici par souci de concision, d'autant qu'elles n'ont pas besoin d'être exploitées pour estimer les paramètres pertinents dans le traitement présenté ici.

On décrit ci-après l'analyse de l'empreinte temporelle par estimation séquentielle des paramètres.

L'estimation des paramètres du modèle d'après une série temporelle calculée se fait de façon similaire au cas d'une seule réflexion précédemment décrit. On se place d'abord dans la situation la plus générale (excluant des cas particuliers traités ensuite), correspondant à un cas favorable lorsque les retards ne se « chevauchent » pas : les séries décrites ci-dessus ne connaissent alors pas de coïncidence temporelle, c'est-à-dire que tout pic identifiable appartient à une seule d'entre elles. Donc en relevant les pics temporels par retard croissant à partir de t=0, tout nouveau pic détecté, de retard TAUnew, peut être soit attribué à une série déjà identifiée, soit définir le début d'une nouvelle série. En effet, compte-tenu d'un ensemble de retards caractéristiques de réflexions déjà identifiées, le premier cas se détecte s'il existe des entiers positifs k ou pour partie nuls donnant TAUnew selon Eq.40, sans quoi on tombe dans le deuxième cas et l'on augmente le jeu des réflexions identifiées en introduisant le nouveau retard TAUN+1, associé à une direction que l'on peut estimer de la manière décrite dans le cas d'une réflexion seule.

En pratique, il peut ne pas être nécessaire de chercher à expliquer de nombreux pics temporels. On se restreint à de premiers pics observés, d'autant plus qu'ils sont les plus facilement détectables car d'amplitudes (ou magnitudes, en valeur absolue) plus importantes que les suivants. Ainsi, les situations où des retards ont des multiples communs mais sont de rang Ki ; Kj élevés (ou non faibles) peuvent être analysées en fonction de l'amplitude par le traitement ci-dessus.

Tant que la somme des modules de gains implicites gn (n>0) est inférieure à 1 (Eq.38), la Transformée de Fourier inverse (Eq.31) donne une empreinte temporelle unidirectionnelle se développant sur les temps positifs.

Si en revanche la somme des modules de gains implicites gn (n>0) est supérieure à 1, la Transformée de Fourier inverse donne une empreinte temporelle TDVV « bidirectionnelle », avec des séries se développant en général à la fois vers les temps positifs et vers les temps négatifs (courbe du haut de la figure 5B à titre d'illustration). Une telle situation dans laquelle un ou plusieurs gains de réflexion seraient plus grands que 1 peut se rencontrer par exemple quand l'onde directe est d'amplitude moins grande que la somme des amplitudes des ondes issues des réflexions sur une ou plusieurs cloisons. Dans ce « cas défavorable », le pic principal au temps zéro ne correspond plus strictement au vecteur u0, mais à un mélange de celui-ci avec une proportion plus ou moins importante des vecteurs désignant les directions des réflexions. Cela entraîne un biais de localisation (de la 'DoA estimée'). Un autre symptôme est que le pic principal a alors une norme différente de 1 en général, et plus souvent inférieure à 1. En fonction de l'importance relative de ce problème, on peut évaluer à quel point le vecteur U0 offre une estimation de DoA raisonnable (faiblement biaisée), fournissant donc un facteur de confiance sur l'estimation et permettant de retenir préférentiellement l'estimation faite sur certaines trames. Lorsque le risque de biais d'estimation s'avère excessif, on peut sélectionner les trames les moins exposées à ce problème, comme décrit plus loin en référence à la figure 3 (composée par les figures 3A et 3B).

On peut procéder donc à l'observation des premiers pics pour une salle donnée par l'analyse fréquentielle de sous-trames temporelles. Les trames où se localisent des attaques du signal (montée d'énergie, transitoire, etc.) sont celles qui permettent d'observer un mélange acoustique impliquant seulement les fronts d'onde les plus précoces : le son direct et une ou plusieurs réflexions (de sorte que la « somme des gammas » précitée reste inférieure à 1 selon Eq.38).

S'agissant de trames contenant les attaques du signal, on peut ajuster (éventuellement de façon dynamique) la fenêtre temporelle pour l'analyse fréquentielle, en lui donnant par exemple une forme asymétrique et globalement décroissante, de sorte que la « bosse » de la fenêtre donne plus de poids à la montée du signal (attaque, transitoire) donc au son direct, et progressivement moins de poids (par exemple, mais sans obligation, de façon approximativement exponentielle). Ainsi on réduit artificiellement l'amplitude des fronts d'onde plus tardifs par rapport aux fronts d'onde plus précoces, et on s'approche de la condition de convergence la série de Taylor assurant un développement temporel unidirectionnel.

Il est présenté ci-après à titre d'exemple un fenêtrage temporel de type exponentiel décroissant, à appliquer sur le signal analysé, afin de ramener l'analyse de l'empreinte temporelle qui en découle à un cas favorable sans biais substantiel sur l'estimation des directions d'arrivée des ondes. On pose l'opération, valable à partir d'un temps $t_0$ désigné comme le temps 0 par commodité, et correspondant de préférence à l'instant d'une attaque de signal, précédée de silence, comme à l'équation Eq.42, avec ALPHA>0, et, en y réintégrant la forme convolutive impliquant s(t) et $\mathbf{h}$(t), on trouve la forme de l'équation Eq.43.

L'équation Eq.44 fait intervenir alors la propriété de l'exponentielle pour laquelle ce choix se justifie, pour aboutir à la forme donnée à Eq.45, ce qui revient à établir l'équation Eq.46.

Donc si l'on modélise la réponse impulsionnelle par un ensemble de réflexions spéculaires s'ajoutant au son direct, on obtient, l'équation Eq.47.

Ainsi, si la somme des gamma est supérieure ou égale à 1 (avec une possibilité de « série bidirectionnelle »), il est toujours possible de déterminer un facteur d'atténuation ALPHA tel que la somme des gains ainsi « adaptés » (Eq.48) devienne inférieure à 1.

On constate alors que l'empreinte temporelle est de nature unidirectionnelle, ce qui est mis en évidence par des pics uniquement pour des temps positifs après application de la fenêtre à exponentielle décroissante (partie inférieure de la figure 5B). On observe aussi qu'en pratique l'énergie du signal observé décroit très vite avec l'exponentielle, l'impact numérique -sur les estimations- d'une troncature dudit signal devient tout à fait négligeable au-delà d'un temps relativement court de troncature. En d'autres termes, on obtient à plus court terme les avantages d'une analyse à long terme qui englobe à la fois tout le signal excitateur et sa réverbération. En effet, le « TDVV » observé est conforme au modèle d'interférence sans les erreurs dues à la dynamique du signal. C'est donc une double propriété que possède la pondération par une telle fenêtre, qui permet idéalement d'obtenir une empreinte temporelle exploitable.

En pratique, ne connaissant pas à l'avance l'amplitude des réflexions, il convient de déterminer l'atténuation ALPHA, en cherchant de préférence un compromis entre une valeur suffisamment basse pour assurer l'unidirectionnalité de l'empreinte temporelle et une valeur qui n'est pas trop basse pour éviter d'amoindrir les chances de détection et d'estimation des ondes indirectes. Par exemple, on peut déterminer cette valeur en termes de facteur d'atténuation $a_{EXP}$ par une durée $t_{EXP}$ qui soit physiquement représentative des phénomènes observés (typiquement 5ms) de sorte que ALPHA = - (log $a_{EXP}$)/ $t_{EXP}$

Un processus itératif (par exemple par dichotomie) peut être mis en oeuvre pour ajuster la valeur d'atténuation.

A partir d'une valeur d'atténuation seuil, lorsque l'empreinte temporelle obtenue est détectée comme bidirectionnelle donc a priori avec un vecteur U0 biaisé, on réitère l'analyse avec une atténuation plus forte, sinon on adopte au moins l'estimation de U0 et si les pics suivants sont peu discernables (car diminués avec l'atténuation) alors on réitère l'analyse avec une atténuation intermédiaire entre les deux précédentes, et ainsi de suite s'il le faut jusqu'à pouvoir estimer le vecteur U1.

Néanmoins, l'approche d'une fenêtre à décroissance exponentielle peut être sensible aux perturbations notamment en début de fenêtrage où elles sont amplifiées de façon importante. Une perturbation autre qu'un bruit peut être simplement la réverbération de la source elle-même au début du fenêtrage si elle a été activée peu de temps avant. On peut alors introduire des traitements de débruitage pour réduire de telles perturbations.

On peut prévoir de manière générale des fenêtres temporelles de formes et/ou tailles différentes, voire un chevauchement entre fenêtres avec recouvrement afin de maximiser les chances d'obtenir une « empreinte favorable ».

On choisit une taille de DFT initiale généralement plus grande que cette fenêtre d'analyse.

Bien entendu, on se place dans le contexte de traitement de signaux audionumériques, échantillonnés à une fréquence d'échantillonnage donnée, sous la forme de blocs successifs (ou « trames ») d'échantillons.

On peut prévoir optionnellement encore un prétraitement avec détection d'attaque, de transitoire, etc., puis débruitage temps-fréquence par exemple par définition d'un masque (filtre temps-fréquence, éventuellement binaire), de façon à éviter d'introduire dans l'empreinte d'interférence des éléments issus d'autres sources d'ambiance et/ou de champ diffus. Il convient de calculer la réponse impulsionnelle du masque (résultat de la transformée inverse) pour contrôler l'influence du masque sur l'analyse des pics. On peut alternativement l'intégrer dans une pondération fréquentielle de l'empreinte d'une trame considérée à mémoriser, de façon à calculer ultérieurement une moyenne pondérée d'empreintes fréquentielles correspondant a priori à des mélanges interférents semblables (typiquement sur des attaques de signal, en vérifiant que la source concernée n'a pas bougé, ce que l'on peut deviner à travers une estimation des retards).

Ainsi, on procède ensuite à l'extraction des pics et à leur observation, par exemple d'après la norme |V(t)| : un pic maximum, puis le suivant, donnent TAU1 (en général), etc.

On procède ensuite au diagnostic de l'empreinte temporelle, en détectant (d'après {tau_n} et V(sum(k_n.tau_n))) :

- si on a un re-bouclage temporel (une sorte d' « aliasing » circulaire) du fait du choix d'une FFT sur un support temporel trop court,
- si on a bien une série unidirectionnelle progressive, ou au contraire une série bidirectionnelle,

ou encore si on est dans un cas particulier d'une série sans atténuation notable (quand la somme des gains sum(gn) reste proche de 1) ou encore d'une série rétrograde (quand au moins un gain g_n implicite > 1).

On peut alors :

- attribuer une note de « bonne trame » ou de « bonne empreinte » (permettant une estimation fiable, *a priori* sans biais de DoA, car unidirectionnelle), et la mémoriser,
- faire l'estimation (u_n) et
- ajuster l'analyse en amont au besoin par le choix d'une fenêtre temporelle adaptée.

On a décrit ci-avant une analyse de l'empreinte temporelle mais une analyse fréquentielle peut être opérée plus simplement comme suit.

Il est facile de montrer mathématiquement que le pic au temps zéro est par construction égal à la moyenne du vecteur vélocité sur son spectre complet (la partie réelle s'annulant par symétrie hermitienne), ou encore de sa partie réelle si on ne considère que les fréquences positives. On peut estimer qu'il est alors inutile de calculer une Transformée inverse du FDVV pour avoir une estimation de DoA si on ne s'intéresse qu'au son direct. L'examen temporel du TDVV permet cependant de détecter si cette DoA est fiable (critère de développement vers les temps positifs et croissants).

Ce cas favorable s'observe plus plausiblement lors d'attaques du signal source, lorsque le mélange est encore peu complexe. De manière générale il suffit d'opérer l'estimation sur ces moments.

Par ailleurs, en pratique, les empreintes fréquentielle et temporelle du VV ne sont pas toujours identifiables à un modèle idéal de mélange d'ondes interférentes. Il se peut que le signal source n'excite pas suffisamment ou pas toujours aux moments-clés une plage significative de fréquences, faute de puissance émise, éventuellement compte tenu de la concurrence d'autres composantes du champ sonore capté (SNR ou SIR insuffisant). Ceci peut être lié à un fond sonore d'ambiance plus ou moins diffus (autres sources sonores), bruit microphonique.

On peut alors pratiquer l'un au moins de ces traitements ou plusieurs de ces traitements en combinaison :

- sélection d'échantillons temps-fréquence avec détection d'attaque selon des algorithmes évolués,

- lissage du vecteur vélocité sur plusieurs trames (moyenne de V(f) pondérée par exemple par les $|W(f)|^2$ des trames en question et un facteur d'oubli éventuellement dynamique), éventuellement en passant par le vecteur intensité,
- procéder à une moyenne de V(f) pondérée par $|W(f)|^2$ sur une sélection de trames d'attaque (si les retards extraits sont identiques), pour compléter l'empreinte fréquentielle et consolider l'empreinte temporelle.

Pour des raisons d'économie de calcul, on peut préconiser en outre de ne réaliser les calculs de TDVV, voire, en amont, de FDVV, que pour des trames que l'on détecte comme étant plus consistantes en information : par exemple les trames d'attaque si l'on est dans des situations où elles sont détectables par des traitements simples, auquel cas on a même intérêt à positionner la fenêtre d'analyse sur la montée du signal.

Pour la bonne estimation de retards non entiers (retard fractionnaire et ses multiples dans la série temporelle), on peut envisager une estimation de pic par interpolation inter-échantillons et/ou une analyse fréquentielle locale (en isolant le pic sur un voisinage resserré temporellement) et affiner le retard d'après la réponse en phase.

On peut effectuer une sélection préalable de pics temporels d'après une estimation courante des retards caractéristiques des séries.

Ainsi, on peut résumer les étapes mises en oeuvre dans un exemple de réalisation possible comme illustré sur les figures 3A et 3B. A l'étape S1, on calcule la transformée de Fourier (de temporel à fréquentiel) des signaux ambisoniques qui peuvent être sous forme d'une succession de « trames » (blocs d'échantillons successifs). Pour chaque trame k transformée (étape S2), on peut appliquer un masque dynamique à certaines des bandes de fréquences pour lesquelles le rapport signal à bruit est inférieur à un seuil (certaines bandes de fréquences pouvant en effet être fortement bruitées par exemple par un bruit inhérent au microphone ou autre, de sorte que l'exploitation d'un signal capté dans cette bande de fréquences est compromise). En particulier, la recherche de bruit par bande de fréquences est opérée à l'étape S3 préférentiellement sur la composante « omni » W, et les bandes de fréquences altérées par le bruit (au-delà d'un seuil par exemple tel que SNR<0dB) sont masquées (c'est-à-dire mises à zéro) à l'étape S4.

Ensuite à l'étape S5, le vecteur vélocité V(f) est calculé dans le domaine fréquentiel par exemple par l'équation Eq.6 (ou encore sous la forme de Eq.11, Eq.18 ou Eq.20).

Dans un exemple de réalisation ici, on applique des poids q(f) calculés comme décrit plus loin pour donner plus ou moins d'importance à des bandes de fréquences f. Une telle réalisation permet d'exprimer le vecteur vélocité V(f) dans des bandes de fréquences où son évolution est significative. Pour ce faire, on calcule itérativement les poids optimums en fonction de U0 et V(f). Ainsi, en revenant au traitement algorithmique de la figure 3A, à l'étape S6, les différents poids q(f) sont mis à 1. A l'étape S7, on applique la pondération q(f) appliquée à V(f) par bande, de sorte que Vbar(f) = q(f)V(f). A l'étape S8, on détermine U0 pour chaque trame k, tel que :
U0(k) = E(Re(Vbar(f))), où E(x) est ici à titre d'exemple l'espérance de x, ce qui s'apparente ainsi à une moyenne sur l'ensemble des fréquences de la partie réelle du vecteur vélocité estimé Vbar(f).

Bien entendu, cette première estimation de U0(k) est grossière. Elle est affinée itérativement en calculant les poids par rapport à la détermination précédente de U0(k) en utilisant l'équation Eq.49 s'appuyant sur la partie imaginaire du vecteur V(f), et où le vecteur m est un vecteur unitaire, normal au plan défini par le vecteur U0 et une normale à la paroi (la direction z de la figure 1 par exemple). Le vecteur m est estimé itérativement aussi en fonction de U0 à l'étape S9, puis les poids sont calculés par Eq.49 à l'étape S10. Les poids trouvés sont appliqués à l'étape S7, et l'estimation de U0 est affinée jusqu'à convergence en sortie du test S11. A cette étape on a estimé U0(k) pour les différentes trames.

On peut en déduire U1, par une relation du type Eq.41 décrite précédemment. Dans la variante décrite ici, on détermine U1 par les équations Eq.50 à Eq.52, en ayant préalablement appliqué une transformée inverse IDFT (de fréquentielle vers temporelle) à l'étape S12 au vecteur Vbar(f) trouvé à l'étape S7, pour obtenir une représentation temporelle V(t) du vecteur vélocité. Une telle réalisation permet, comme vu précédemment en référence à la figure 2, d'identifier les différents retards TAU1, TAU2, etc. en cas de différentes surfaces réfléchissantes. Le premier retard TAU1 est identifié car il s'agit d'un premier pic de V(t) dans le temps qui suit l'instant de réception du trajet direct. Ainsi, dans l'équation Eq.51, tmax(k) est l'instant qui maximise le module de V(t)k calculé pour la trame k.

Au test S13, on vérifie pour chaque trame que le module de V(t=0) est bien supérieur à celui de V(t) pour t>0. Une trame ne vérifiant pas cette condition est éliminée à l'étape S14. On détermine ensuite à l'étape S15 les différents retards, TAU1, puis TAU2 (en retirant des modules de V(t)k à comparer dans Eq.51 ceux correspondant au retard TAU1), etc. Le retard TAUm est donné par la composante tmax trouvée à chaque itération m, divisée par la fréquence d'échantillonnage fs conformément à Eq.52, tenant compte que les temps t et tmax(k) sont d'abord exprimés en termes d'indice d'échantillon (le temps zéro étant pris comme référence pour l'indice zéro). On peut alors calculer également les vecteurs U1, U2, etc., avec l'équation Eq.50.

Les autres paramètres peuvent être déterminés également, notamment dû donné par Eq.28 à l'étape S16 (en vérifiant ensuite au test S17 une cohérence avec des données de salle classique telle que d0min=0, et d0max=5m ; sinon la trame comporte une erreur et peut être rejetée à l'étape S14).

L'étape S18 peut consister à sélectionner davantage les « bonnes » trames, représentatives d'une attaque de son avec de premières réflexions. Le critère D(k) de sélection de telles trames peut être illustré à titre d'exemple par l'équation Eq.53 où $C(f)_i^{(k)}$ désigne une magnitude (amplitude en valeur absolue) détectée sur le canal ambisonique i, à l'échantillon temps fréquence (t, f) issu de la première transformée (temps vers fréquences) de la trame k. Epsilon désigne une valeur positive non nulle pour éviter un zéro au dénominateur en absence de signal. F désigne le nombre total de sous-bandes de fréquences utilisées.

On peut ainsi ne retenir à l'étape S22 que les trames dont le critère D(k) calculé à partir de Eq.53 n'est pas plus petit que 90% du maximum Dmax trouvé à l'étape S21 parmi les critères de toutes les trames D(k).

Ainsi, à l'étape S18, les valeurs D(k) sont calculées pour l'ensemble des trames, puis à l'étape S19, le traitement délivre les U0(k), d0(k), D(k) pour les différentes trames. A l'étape S20, les valeurs D(k) sont collectées pour identifier à l'étape S21 la plus élevée et éliminer à l'étape S22 les trames dont la valeur D(k) est inférieur à 0,9 Dmax.

Enfin, à l'étape S23, le vecteur U0 qui est retenu est préférentiellement ici le médian (plutôt que le moyen) parmi les vecteurs U0 des différentes trames retenues. La distance d0 retenue est aussi la valeur médiane parmi les distances d0 des différentes trames retenues.

Bien entendu la présente invention ne se limite pas aux formes de réalisation décrites ci-avant à titre d'exemple ; elle s'étend à d'autres variantes.

On a décrit ci-avant une application à un traitement de signaux ambisoniques d'ordre 1 (FOA). L'ordre peut être supérieur pour un enrichissement en termes de résolution spatiale.

En effet, on a décrit ci-avant une représentation ambisonique d'ordre 1, mais il est possible de prévoir des ordres supérieurs. Dans ce cas, le calcul vecteur vélocité est augmenté des ratios des composantes directionnelles d'ordres supérieurs sur la composante W(f), et les vecteurs Un sont implicitement augmenté d'autant de dimensions. L'augmentation des dimensions (au-delà de 3) et donc de la résolution spatiale permet de mieux différencier les vecteurs U0, U1, ... Un entre eux, et de détecter plus facilement, dans l'empreinte temporelle, les pics V(k*TAUn) qui sont proportionnels à (U0-Un), même lorsque les vecteurs U0 et Un sont proches angulairement, ce qui arrive dans le cas de réflexions rasantes (lorsque la source est lointaine et/ou proche du sol par exemple). Cela permet donc d'estimer plus finement les paramètres recherchés U0, U1, d0, etc.

Plus généralement, on peut remplacer le vecteur vélocité par un ratio entre composantes d'une représentation acoustique spatiale de type « coïncident » dans le domaine fréquentiel et travailler dans un système de coordonnées caractéristique de ladite représentation spatiale.

Pour pallier les cas par exemple de plusieurs sources, le calcul de TDVV peut être exploité plus généralement en association avec des méthodes d'intelligence Artificielle, dont les réseaux de neurones. Quelques stratégies d'entraînement envisagées (par exemple sur des empreintes issues de modèles ou de SRIR fenêtrées, et pas forcément d'après des signaux originaux) peuvent permettre que le réseau apprenne à exploiter la succession de trames pour améliorer les détections et estimations par rapport à des situations de salles données.

ANNEXE

$$Eq.1 \quad \mathbf{b}(t) = \begin{bmatrix} w(t) \\ x(t) \\ y(t) \\ z(t) \end{bmatrix}$$

$$Eq.2 \quad \mathbf{b}(t) = s_1(t) \begin{bmatrix} 1 \\ x_{\vec{u}_1} \\ y_{\vec{u}_1} \\ z_{\vec{u}_1} \end{bmatrix} = s_1(t) \begin{bmatrix} 1 \\ \vec{u}_1 \end{bmatrix}, \quad \vec{u}_1 = [x_{\vec{u}_1} \ y_{\vec{u}_1} \ z_{\vec{u}_1}]^T$$

$$Eq.3 \quad \mathbf{B}(f) = \begin{bmatrix} W(f) \\ X(f) \\ Y(f) \\ Z(f) \end{bmatrix};$$

$$\text{Eq.4} \quad \mathbf{B}(f) = S_1(f)\begin{bmatrix}1\\\vec{u}_1\end{bmatrix}$$

$$\text{Eq.5} \quad \{\vec{u}_n, S_n(f)\}_{n=1\dots N} : \mathbf{B}(f) = \sum_{n=1}^{N} S_n(f)\begin{bmatrix}1\\\vec{u}_n\end{bmatrix}$$

$$\text{Eq.6} \quad \vec{V}(f) = \frac{1}{W(f)}\begin{bmatrix}X(f)\\Y(f)\\Z(f)\end{bmatrix}$$

$$\text{Eq.7} \quad \vec{I}(f) = W^*(f)\begin{bmatrix}X(f)\\Y(f)\\Z(f)\end{bmatrix}; \quad \vec{V}(f) = \frac{1}{|W(f)|^2}\vec{I}(f)$$

$$\text{Eq.8} \quad \mathbf{h}(t) = \begin{bmatrix}h_W(t)\\h_X(t)\\h_Y(t)\\h_Z(t)\end{bmatrix}$$

$$\text{Eq.9-1} \quad \vec{u}_n = [h_X(\tau_n)\; h_Y(\tau_n)\; h_Z(\tau_n)]/h_W(\tau_n)$$

$$\text{Eq.9-2} \quad b(t) = s(t) * h(t) = \begin{bmatrix}s(t)*h_W(t)\\s(t)*h_X(t)\\s(t)*h_Y(t)\\s(t)*h_Z(t)\end{bmatrix}$$

$$\text{Eq.10} \quad B^{LT}(f) = \mathcal{F}[b(t)](f) = \begin{bmatrix}W^{LT}(f)\\X^{LT}(f)\\Y^{LT}(f)\\Z^{LT}(f)\end{bmatrix}; H^{LT}(f) = \begin{bmatrix}H_W^{LT}(f)\\H_X^{LT}(f)\\H_Y^{LT}(f)\\H_Z^{LT}(f)\end{bmatrix}; B^{LT}(f) = S^{LT}(f).H^{LT}(f)$$

$$\text{Eq.11} \quad \vec{V}^{LT}(f) = \frac{1}{W^{LT}(f)}\begin{bmatrix}X^{LT}(f)\\Y^{LT}(f)\\Z^{LT}(f)\end{bmatrix} = \frac{1}{H_W^{LT}(f)}\begin{bmatrix}H_X^{LT}(f)\\H_Y^{LT}(f)\\H_Z^{LT}(f)\end{bmatrix}$$

$$\text{Eq.12} \quad \mathbf{h}(t) = \mathbf{h}_{early}(t) + \mathbf{h}_{late}(t) = \sum_{n=0}^{N} g_n.\delta(t-\tau_n).\begin{bmatrix}1\\\vec{u}_n\end{bmatrix} + \mathbf{h}_{late}(t)$$

$$\text{Eq.13} \quad g_0 = 1 \; ; \tau_0 = 0$$

$$\text{Eq.14} \quad \mathbf{H}_{\text{early}}(f) = \sum_{n=0}^{N} g_n \cdot e^{-j2\pi f \tau_n} \cdot \begin{bmatrix} 1 \\ \vec{u}_n \end{bmatrix} = \sum_{n=0}^{N} \gamma_n(f) \cdot \begin{bmatrix} 1 \\ \vec{u}_n \end{bmatrix} \; ; \gamma_n = \gamma_n(f) = g_n \cdot e^{-j2\pi f \tau_n}$$

$$\text{Eq.15} \quad \gamma_0 = 1$$

$$\text{Eq.16} \quad \boldsymbol{B}(f) = S(f) \sum_{n=0}^{N} g_n \cdot e^{-j2\pi f \tau_n} \cdot \begin{bmatrix} 1 \\ \vec{u}_n \end{bmatrix} = S(f) \sum_{n=0}^{N} \gamma_n(f) \cdot \begin{bmatrix} 1 \\ \vec{u}_n \end{bmatrix}$$

$$\text{Eq.17} \quad \vec{V}^{\text{ST}}(T,f) = \frac{1}{w^{\text{ST}}(T,f)} \begin{bmatrix} X^{\text{ST}}(T,f) \\ Y^{\text{ST}}(T,f) \\ Z^{\text{ST}}(T,f) \end{bmatrix} = \frac{w^{\text{ST}}(T,f)^*}{|w^{\text{ST}}(T,f)|^2} \begin{bmatrix} X^{\text{ST}}(T,f) \\ Y^{\text{ST}}(T,f) \\ Z^{\text{ST}}(T,f) \end{bmatrix}$$

$$\text{Eq.18} \quad \vec{V}^{\text{ST}}(T,f) = \frac{w^{\text{ST}}(T,f)^*}{|w^{\text{ST}}(T,f)|^2 + \varepsilon} \begin{bmatrix} X^{\text{ST}}(T,f) \\ Y^{\text{ST}}(T,f) \\ Z^{\text{ST}}(T,f) \end{bmatrix}$$

$$\text{Eq.19} \quad \mathbf{h}^{\text{smx}}(t) = \sum_{n=0}^{N} g_n \cdot \delta(t - \tau_n) \cdot \begin{bmatrix} 1 \\ \vec{u}_n \end{bmatrix} \; ; \mathbf{H}^{\text{smx}}(f) = \sum_{n=0}^{N} g_n \cdot e^{-j2\pi f \tau_n} \cdot \begin{bmatrix} 1 \\ \vec{u}_n \end{bmatrix}$$

$$\text{Eq.20} \quad \vec{V}^{\text{ST}}(T,f) \cong \vec{V}^{\text{smx}}(f) = \frac{1}{H_W^{\text{smx}}(f)} \begin{bmatrix} H_X^{\text{smx}}(f) \\ H_Y^{\text{smx}}(f) \\ H_Z^{\text{smx}}(f) \end{bmatrix}$$

$$\text{Eq.21} \quad \boldsymbol{B}(f) = S(f) \begin{bmatrix} 1 + \gamma_1(f) \\ \vec{u}_0 + \gamma_1(f)\vec{u}_1 \end{bmatrix}$$

$$\text{Eq.22} \quad \vec{V}(f) = \vec{V} = \frac{\vec{u}_0 + \gamma_1\vec{u}_1}{1 + \gamma_1}$$

Eq.23

$$\Re(\vec{V}) = \frac{\vec{V} + \vec{V}^*}{2} = \frac{(\vec{u}_0 + \gamma_1 \vec{u}_1)(1 + \gamma_1^*) + (\vec{u}_0 + \gamma_1^* \vec{u}_1)(1 + \gamma_1)}{2|1 + \gamma_1|^2}$$

$$= \vec{u}_0 + \frac{|\gamma_1|^2 + \Re(\gamma_1)}{|1 + \gamma_1|^2}(\vec{u}_1 - \vec{u}_0)$$

$$= \vec{u}_0 + \frac{g_1^2 + g_1 \cos(2\pi f \tau_1)}{1 + 2g_1 \cos(2\pi f \tau_1) + g_1^2}(\vec{u}_1 - \vec{u}_0)$$

$$\Im(\vec{V}) = \frac{\vec{V} - \vec{V}^*}{2j} = \frac{\Im(\gamma_1)}{|1 + \gamma_1|^2}(\vec{u}_1 - \vec{u}_0) = \frac{g_1 \sin(2\pi f \tau_1)}{1 + 2g_1 \cos(2\pi f \tau_1) + g_1^2}(\vec{u}_1 - \vec{u}_0)$$

Eq.24   $\Re(\vec{V}_{\text{mean}}) = \vec{u}_0$ ;      Eq.25   $\vec{V}_{\text{maxproba}} = \frac{\vec{u}_0 + g_1 \vec{u}_1}{1 + g_1}$

Eq.26   $d_0 \cos \varphi_0 = d_1 \cos \varphi_1$

Eq.27   $d_1 - d_0 = \tau_1 c$

Eq.28   $d_0 = \frac{\tau_1 c}{\frac{\cos \varphi_0}{\cos \varphi_1} - 1}$

Eq.29   $z_0 = d_0 \frac{\sin \varphi_0 - \sin \varphi_1}{2}$ ;

Eq.30   $z_{mic} = z_0 - d_0 \sin \varphi_0$

Eq.31   $\vec{V}(t) = \mathcal{F}^{-1}[\vec{V}(f)](t)$

Eq.32   $\frac{1}{1-x} = 1 + x + x^2 + x^3 + \cdots = \sum_{k \geq 0} x^k$ ; $x = -\gamma_1$ ; $|\gamma_1| < 1$

Eq.33   $\vec{V}(f) = (\vec{u}_0 + \gamma_1 \vec{u}_1) \sum_{k \geq 0} (-\gamma_1)^k =$
$\vec{u}_0 + \sum_{k \geq 1} (-\gamma_1)^k (\vec{u}_0 - \vec{u}_1) = \vec{u}_0 + \sum_{k \geq 1} (-g_1)^k e^{-j2\pi f k \tau_1}(\vec{u}_0 - \vec{u}_1)$

Eq.34   $\vec{V}(t) = \delta(t)\vec{u}_0 + \sum_{k \geq 1} \delta(t - k\tau_1)(-g_1)^k (\vec{u}_0 - \vec{u}_1)$

$$\text{Eq.35} \quad \vec{V} = \frac{\vec{u}_0 + \sum_{n=1}^{N} \gamma_n \vec{u}_n}{1 + \sum_{n=1}^{N} \gamma_n} = \left(\vec{u}_0 + \sum_{n=1}^{N} \gamma_n \vec{u}_n\right) \sum_{k \geq 0} \left(\sum_{n=1}^{N} -\gamma_n\right)^k$$

$$\text{Eq.36} \quad \sum_{k \geq 0} \left(\sum_{n=1}^{N} -\gamma_n\right)^k = \sum_{k_1, k_2, \ldots k_N \geq 0} \frac{(k_1 + k_2 + \cdots + k_N)!}{k_1! k_2! \ldots k_N!} \prod_{n=1}^{N} (-\gamma_n)^{k_n}$$

$$\text{Eq.37} \quad \vec{V} = \vec{u}_0 + \sum_{n=1}^{N} \left(\sum_{k \geq 1} (-\gamma_n)^k (\vec{u}_0 - \vec{u}_n)\right) + \text{SC}$$

$$\text{Eq.38} \quad \left|\sum_{n=1}^{N} \gamma_n(f)\right| < 1 \; ; \sum_{n=1}^{N} |g_n| < 1$$

$$\text{Eq.39} \quad \vec{V}(t) = \delta(t)\vec{u}_0 + \sum_{n=1}^{N} \left(\sum_{k \geq 1} \delta(t - k\tau_n)(-g_n)^k\right)(\vec{u}_0 - \vec{u}_n) + SARC$$

$$\text{Eq.40} \quad \{k_n \geq 0\}_{n=1:N} \; ; \tau_{new} = \sum_n^N k_n \tau_n \; ; \text{TAUN+1} = \tau_{N+1} = \tau_{new}$$

$$\text{Eq.41} \quad \vec{u}_1 = \vec{u}_0 - 2(\vec{u}_0.\vec{n})\vec{n}$$

$$\text{Eq.42} \quad \check{\mathbf{b}}(t) = \mathbf{b}(t).e^{-\alpha t}$$

$$\text{Eq.43} \quad \check{\mathbf{b}}(t) = e^{-\alpha t}(s(t) * \mathbf{h}(t)) = e^{-\alpha t} \int_{\tau \geq 0}^{\square} s(t - \tau)\mathbf{h}(\tau)d\tau$$

$$\text{Eq.44} \quad e^{-\alpha t} = e^{-\alpha(t-\tau)}.e^{-\alpha\tau}$$

$$\text{Eq.45} \quad \check{\mathbf{b}}(t) = \int_{\tau \geq 0}^{\square} s(t - \tau)e^{-\alpha(t-\tau)}.\mathbf{h}(\tau)e^{-\alpha\tau}d\tau$$

$$\text{Eq.46} \quad \check{\mathbf{b}}(t) = \int_{\tau \geq 0}^{\square} \check{s}(t - \tau)\check{\mathbf{h}}(\tau)\,d\tau = \check{s}(t) * \check{\mathbf{h}}(t) \quad (\check{s}(t) = s(t).e^{-\alpha t} \; ; \; \check{\mathbf{h}}(t) = \mathbf{h}(t).e^{-\alpha t})$$

$$\text{Eq.47} \quad \check{\mathbf{h}}(t) = \sum_{n=0}^{N} g_n.e^{-\alpha\tau_n}.\delta(t - \tau_n).\begin{bmatrix} 1 \\ \vec{u}_n \end{bmatrix} = \sum_{n=0}^{N} \check{g}_n.\delta(t - \tau_n).\begin{bmatrix} 1 \\ \vec{u}_n \end{bmatrix}$$
$$(\check{g}_n = g_n.e^{-\alpha\tau_n} < g_n)$$

$$\text{Eq.48} \quad \sum_{n=1}^{N} |\check{g}_n| < 1.$$

$$\text{Eq.49} \quad q(f) = \exp\left(-\frac{\left|\Im\left(\overline{V}(f)\right).\mathbf{m}\right|}{\left\|\Im\left(\overline{V}(f)\right)\right\|}\right)$$

$$\text{Eq.50} \quad \mathbf{u}_1 = \mathbf{u}_0 - \frac{2\mathbf{u}_0 \cdot \mathbf{v}_{\max}(k)}{\|\mathbf{v}_{\max}(k)\|^2}\mathbf{v}_{\max}(k)$$

$$\text{Eq.51} \quad t_{\max}(k) = \operatorname{argmax}_{t>0}\|V(t)_k\|$$

$$\text{Eq.52} \quad \hat{\tau}_1 = \frac{t_{\max}(k)}{f_s}$$

$$\text{Eq.53} \quad D(k) = \max\left(0, \frac{1}{4F}\sum_{f=0}^{F-1} q(f)\sum_{i=0}^{3}\frac{C(f)_i^{(k+1)}-C(f)_i^{(k-1)}}{\max\left(C(f)_i^{(k+1)},C(f)_i^{(k-1)}\right)+\epsilon}\right)$$

$$D(k) \geq 0.9 \ \max_k D(k)$$

## Revendications

1. Procédé de traitement de signaux sonores acquis par un système microphonique,

   pour une localisation d'au moins une source sonore dans un espace comportant au moins une paroi, dans lequel :

   - On applique (S1) une transformée temps fréquences aux signaux acquis,
   - A partir des signaux acquis, on exprime (S5) dans le domaine fréquentiel un vecteur vélocité V(f), complexe avec une partie réelle et une partie imaginaire, le vecteur vélocité caractérisant une composition entre :

     * un premier trajet acoustique, direct entre la source et le système microphonique, représenté par un premier vecteur U0 donnant une direction (DoA) du trajet direct, et
     * au moins un deuxième trajet acoustique issu d'une réflexion sur la paroi et représenté par un deuxième vecteur U1,

   le deuxième trajet ayant, au système microphonique, un premier retard TAU1, par rapport au trajet direct,

   - On détermine (S8, S15) le premier vecteur U0 à partir d'une moyenne sur un ensemble de fréquences de la partie réelle du vecteur vélocité V(f) exprimé dans le domaine fréquentiel (Eq.24), ainsi que le retard TAU1 et le deuxième vecteur U1 au moins en fonction dudit vecteur vélocité, et
   - En fonction du retard TAU1, du premier vecteur U0 et du deuxième vecteur U1, on détermine (S23) au moins un paramètre parmi :

     * une distance d0 de la source au système microphonique,
     * une distance z0 de la source à ladite paroi.

2. Procédé selon la revendication 1, dans lequel les signaux sonores sont acquis par un système microphonique de type ambisonique et le vecteur vélocité V(f) dans le domaine fréquentiel est exprimé par des composantes ambisoniques d'ordre 1 sous une forme de type :

$$V(f) = 1/W(f) \ [X(f), Y(f), Z(f)]^\top.$$

3. Procédé selon l'une des revendications précédentes, dans lequel :

- On applique une transformée inverse, des fréquences vers le temps, au vecteur vélocité pour l'exprimer dans le domaine temporel V(t),
- On recherche au moins un maximum dans l'expression du vecteur vélocité V(t)max en fonction du temps, après une durée du trajet direct, et
- On en déduit le premier retard TAU1, correspondant au temps donnant le maximum V(t)max.

4. Procédé selon la revendication 3, dans lequel :

- On estime le deuxième vecteur U1 en fonction du premier vecteur U0 et en fonction du maximum V(t)max, par une relation du type :

$$U1 = U0 - 2\ (U0\ .\ V(t)max)\ V(t)max\ /\ \|\ V(t)max\ \|^2$$

5. Procédé selon la revendication 4, dans lequel :

- On détermine des angles respectifs PHI0 et PHI1 du premier vecteur U0 et du deuxième vecteur U1, par rapport à ladite paroi, tels que :
PHI0=arcsin(U0.$n_R$) et PHI1=arcsin(U1.$n_R$), où $n_R$ est un vecteur unitaire et normal à la paroi, et
- La distance d0 entre la source et le système microphonique est déterminée en fonction du premier retard TAU1 par une relation du type :

$$d0 = (TAU1xC)/((cosPHI0/cosPHI1)-1),$$

où C est la vitesse du son.

6. Procédé selon la revendication 5, dans lequel la distance z0 de la source à ladite paroi est déterminée par une relation du type :

$$z0 = d0\ (sinPHI0 - sinPHI1)/2$$

7. Procédé selon l'une des revendications précédentes, dans lequel l'espace comprend une pluralité de parois et :

- On applique une transformée inverse, des fréquences vers le temps, au vecteur vélocité pour l'exprimer dans le domaine temporel V(t) sous la forme d'une succession de pics (Eq.39, FIG.2),
- On identifie, dans la succession de pics, des pics liés à une réflexion sur une paroi de ladite pluralité de parois, chaque pic identifié ayant une abscisse temporelle fonction d'un premier retard TAUn du trajet acoustique issu de la réflexion sur la paroi n correspondante, par rapport au trajet direct,
- En fonction de chaque premier retard TAUn, du premier vecteur U0 et de chaque deuxième vecteur Un représentant un trajet acoustique issu d'une réflexion sur une paroi n, on détermine au moins un paramètre parmi :

* la direction (DoA) du trajet direct,
* la distance d0 de la source au système microphonique, et
* au moins une distance zn de la source à la paroi n.

8. Procédé selon la revendication 7, dans lequel les pics liés à une réflexion sur une paroi n ont des abscisses temporelles multiples du retard TAUn associé à cette paroi n.

9. Procédé selon l'une des revendications 7 et 8, dans lequel on présélectionne une première partie de pics à des abscisses temporelles positives les plus petites, pour identifier dans ladite partie les pics associés chacun à une réflexion sur une paroi.

10. Procédé selon l'une des revendications précédentes, dans lequel les signaux acquis sont délivrés sous forme de trames successives d'échantillons, et dans lequel :

- Pour chaque trame, on estime (S18) un score de présence d'une attaque sonore dans la trame (Eq.53), et
- On sélectionne (S22) les trames à scores supérieurs à un seuil pour la détermination dudit au moins un paramètre.

11. Procédé selon l'une des revendications précédentes, dans lequel les signaux acquis par le système microphonique se présentent sous la forme d'une succession d'échantillons, on applique auxdits échantillons une fenêtre de pondération à variation exponentielle décroissante dans le temps (FIG.5A).

12. Procédé selon l'une des revendications précédentes, dans lequel on applique itérativement (S7, S8, S9, S10, S11) une pondération q(f), associée chacune à une bande de fréquences f, au vecteur vélocité V(f) dans le domaine fréquentiel selon une expression du type (Eq.49):

$$q(f) = \exp\left(- |Im(V(f)).m| / (\|\,Im(V(f))\,\|)\right),$$

où !m(V(f)) est la partie imaginaire du vecteur vélocité, complexe, et m est un vecteur unitaire normal au plan défini par le vecteur U0 et une normale (z, fig.1) à la paroi.

13. Dispositif de traitement de signaux sonores, comportant un circuit de traitement pour la mise en oeuvre du procédé selon l'une des revendications précédentes.

14. Programme informatique comportant des instructions pour la mise en oeuvre du procédé selon l'une des revendications 1 à 12, lorsque lesdites instructions sont exécutées par un processeur d'un circuit de traitement.

**Patentansprüche**

1. Verfahren zur Verarbeitung von Schallsignalen, die von einem Mikrofonsystem erfasst wurden,

zur Ortung mindestens einer Schallquelle in einem Raum, der mindestens eine Wand aufweist, wobei:

- eine Zeit-Frequenz-Transformation auf die erfassten Signale angewendet wird (S1),
- anhand der erfassten Signale ein komplexer Geschwindigkeitsvektor V(f) mit einem Realteil und einem Imaginärteil im Frequenzbereich ausgedrückt wird (S5), wobei der Geschwindigkeitsvektor eine Komposition charakterisiert von:

  * einem direkten ersten Schallweg zwischen der Quelle und dem Mikrofonsystem, der durch einen ersten Vektor U0 repräsentiert wird, der eine Richtung (DoA) des direkten Schallweges angibt, und
  * mindestens einem zweiten Schallweg, der sich aus einer Reflexion an der Wand ergibt und durch einen zweiten Vektor U1 repräsentiert wird,

wobei der zweite Schallweg am Mikrofonsystem eine erste Verzögerung TAU1 bezüglich des direkten Schallweges aufweist,

- der erste Vektor U0 aus einem Mittelwert einer Menge von Frequenzen des Realteils des im Frequenzbereich ausgedrückten Geschwindigkeitsvektors V(f) (Eq.24) sowie die Verzögerung TAU1 und der zweite Vektor U1 mindestens in Abhängigkeit von dem Geschwindigkeitsvektor bestimmt werden (S8, S15), und
- in Abhängigkeit von der Verzögerung TAU1, dem ersten Vektor U0 und dem zweiten Vektor U1 mindestens ein Parameter bestimmt wird (S23) von:

  * einer Entfernung d0 der Quelle vom Mikrofonsystem,
  * einer Entfernung z0 der Quelle von der Wand.

2. Verfahren nach Anspruch 1, wobei die Schallsignale von einem Mikrofonsystem vom ambisonischen Typ erfasst werden und der Geschwindigkeitsvektor V(f) im Frequenzbereich durch Ambisonic-Komponenten der Ordnung 1 in einer Form des folgenden Typs ausgedrückt wird:

$$V(f) = 1/W(f) \ [X(f), \ Y(f), \ Z(f)]^T.$$

3. Verfahren nach einem der vorhergehenden Ansprüche, wobei:

   - eine inverse Transformation der Frequenzen in die Zeit auf den Geschwindigkeitsvektor angewendet wird, um ihn im Zeitbereich V(t) auszudrücken,
   - mindestens ein Maximum V(t)max im Ausdruck des Geschwindigkeitsvektors in Abhängigkeit von der Zeit gesucht wird, nach einer Dauer des direkten Schallweges, und
   - daraus die erste Verzögerung TAU1 abgeleitet wird, die der Zeit entspricht, die das Maximum V(t)max liefert.

4. Verfahren nach Anspruch 3, wobei:

   - der zweite Vektor U1 in Abhängigkeit vom ersten Vektor U0 und in Abhängigkeit vom Maximum V(t)max durch eine Beziehung des folgenden Typs geschätzt wird:

$$U1 = U0 - 2 \ (U0 \ . \ V(t)max) \ V(t)max \ / \ || \ V(t)max \ ||^2.$$

5. Verfahren nach Anspruch 4, wobei:

   - jeweilige Winkel PHI0 und PHI1 des ersten Vektors U0 und des zweiten Vektors U1 in Bezug auf die Wand bestimmt werden, so dass:

$$PHI0 = arcsin(U0.n_R) \ und \ PHI1 = arcsin(U1.n_R),$$

   wobei $n_R$ ein zur Wand senkrechter Einheitsvektor ist, und
   - die Entfernung d0 zwischen der Quelle und dem Mikrofonsystem in Abhängigkeit von der ersten Verzögerung TAU1 durch eine Beziehung des folgenden Typs bestimmt wird:

$$d0 = (TAU1xC)/((cosPHI0/cosPHI1)-1),$$

   wobei C die Schallgeschwindigkeit ist.

6. Verfahren nach Anspruch 5, wobei die Entfernung z0 der Quelle von der Wand durch eine Beziehung des folgenden Typs bestimmt wird:

$$z0 = d0 \ (sinPHI0 - sinPHI1)/2.$$

7. Verfahren nach einem der vorhergehenden Ansprüche, wobei der Raum mehrere Wände umfasst und:

   - eine inverse Transformation der Frequenzen in die Zeit auf den Geschwindigkeitsvektor angewendet wird, um ihn im Zeitbereich V(t) in der Form einer Folge von Peaks auszudrücken (Eq.39, FIG.2),
   - in der Folge von Peaks Peaks identifiziert werden, die mit einer Reflexion an einer Wand von den mehreren Wänden zusammenhängen, wobei jeder identifizierte Peak eine Zeitabszisse aufweist, die von einer ersten Verzögerung TAUn des Schallweges, der sich aus der Reflexion an der entsprechenden Wand n ergibt, bezüglich des direkten Schallweges abhängt,
   - in Abhängigkeit von jeder ersten Verzögerung TAUn, dem ersten Vektor U0 und jedem zweiten Vektor Un, der einen sich aus der Reflexion an einer Wand n ergebenden Schallweg repräsentiert, mindestens ein Parameter bestimmt wird von:

      * der Richtung (DoA) des direkten Schallweges,
      * der Entfernung d0 der Quelle vom Mikrofonsystem und
      * mindestens einer Entfernung zn der Quelle von der Wand n.

8. Verfahren nach Anspruch 7, wobei die Peaks, die mit einer Reflexion an einer Wand n zusammenhängen, Zeitabszissen aufweisen, welche Vielfache der dieser Wand n zugeordneten Verzögerung TAUn sind.

9. Verfahren nach einem der Ansprüche 7 und 8, wobei ein erster Teil von Peaks mit den kleinsten positiven Zeitabszissen vorgewählt wird, um in diesem Teil die Peaks zu identifizieren, die jeweils einer Reflexion an einer Wand zugeordnet sind.

10. Verfahren nach einem der vorhergehenden Ansprüche, wobei die erfassten Signale in Form von aufeinander folgenden Rahmen von Abtastwerten geliefert werden und wobei:

   - für jeden Rahmen ein Präsenz-Score einer Schallattacke in dem Rahmen (Eq.53) geschätzt wird (S18),
   - die Rahmen mit Scores, die größer als ein Schwellenwert sind, für die Bestimmung des mindestens einen Parameters ausgewählt werden (S22).

11. Verfahren nach einem der vorhergehenden Ansprüche, wobei die von dem Mikrofonsystem erfassten Signale in Form einer Folge von Abtastwerten vorliegen und auf die Abtastwerte ein Gewichtungsfenster mit exponentiell abnehmender Änderung in der Zeit angewendet wird (FIG.5A).

12. Verfahren nach einem der vorhergehenden Ansprüche, wobei iterativ (S7, S8, S9, S10, S11) eine Gewichtung q(f), die jeweils einem Frequenzband f zugeordnet ist, auf den Geschwindigkeitsvektor V(f) im Frequenzbereich gemäß einem Ausdruck des folgenden Typs (Eq.49) angewendet wird:

$$q(f) = \exp\ (-\ |lm(V(f)).m|/\ (||\ lm(V(f))\ ||),$$

wobei Im(V(f)) der Imaginärteil des komplexen Geschwindigkeitsvektors ist und m ein Einheitsvektor ist, der senkrecht zu der Ebene ist, die durch den Vektor U0 und eine Normale (z, Fig.1) zur Wand definiert ist.

13. Vorrichtung zur Verarbeitung von Schallsignalen, welche eine Verarbeitungsschaltung zur Durchführung des Verfahrens nach einem der vorhergehenden Ansprüche aufweist.

14. Computerprogramm, welches Anweisungen zur Durchführung des Verfahrens nach einem der Ansprüche 1 bis 12, wenn diese Anweisungen von einem Prozessor einer Verarbeitungsschaltung ausgeführt werden, umfasst.

**Claims**

1. Method for processing audio signals acquired by a microphonic system,

   with a view to locating at least one audio source in a space comprising at least one wall, wherein:

   - a time-frequency transform is applied (S1) to the acquired signals,
   - on the basis of the acquired signals, a velocity vector V(f), which is complex having a real part and an imaginary part, is expressed (S5) in the frequency domain, the velocity vector characterizing a composition between:

      * a direct first acoustic path between the source and the microphonic system, which path is represented by a first vector U0 giving a direction (DoA) of the direct path, and
      * at least one second acoustic path resulting from reflection from the wall and represented by a second vector U1,

   the second path having, to the microphonic system, a first delay TAU1, with respect to the direct path,

   - the first vector U0 is determined (S8, S15) from an average over a set of frequencies of the real part of the velocity vector V(f) expressed in the frequency domain (Eq.24), and the delay TAU1 and the second vector U1 are determined at least depending on said velocity vector, and
   - depending on the delay TAU1, on the first vector U0 and on the second vector U1, at least one parameter among the following parameters is determined (S23):

* a distance d0 from the source to the microphonic system,
* a distance z0 from the source to said wall.

2. Method according to Claim 1, wherein the audio signals are acquired by an ambisonic microphonic system and the velocity vector V(f) in the frequency domain is expressed by ambisonic components of order 1 in the following form:

$$V(f) = 1/W(f) \ [X(f), \ Y(f), \ Z(f)]^T.$$

3. Method according to one of the preceding claims, wherein:

- an inverse transformation, from frequency to time, is applied to the velocity vector to express it in the time domain V(t),
- at least one maximum is sought in the expression of the velocity vector V(t)max as a function of time, after a time of the direct path, and
- therefrom, the first delay TAU1, corresponding to the time giving the maximum V(t)max, is deduced.

4. Method according to Claim 3, wherein:

- the second vector U1 is estimated depending on the first vector U0 and depending on the maximum V(t)max, using the following relationship:

$$U1 = U0 - 2 \ (U0 \ . \ V(t)max) \ V(t)max \ / \ || \ V(t)max \ ||^2.$$

5. Method according to Claim 4, wherein:

- the respective angles PHI0 and PHI1 of the first vector U0 and of the second vector U1 with respect to said wall are determined, such that:

$$PHI0 = arcsin(U0.n_R) \ and \ PHI1 = arcsin(U1.n_R),$$

where $n_R$ is a unit vector normal to the wall, and
- the distance d0 between the source and the microphonic system is determined depending on the first delay TAU1 using the following relationship:

$$d0 = (TAU1xC)/((cosPHI0/cosPHI1)-1),$$

where C is the speed of sound.

6. Method according to Claim 5, wherein the distance z0 from the source to said wall is determined using the following relationship:

$$z0 = d0 \ (sinPHI0 - sinPHI1)/2.$$

7. Method according to one of the preceding claims, wherein the space comprises a plurality of walls and:

- an inverse transformation, from frequency to time, is applied to the velocity vector to express it in the time domain V(t) in the form of a succession of peaks (Eq.39, FIG.2),
- peaks related to a reflection from a wall of said plurality of walls are identified in the succession of peaks, each identified peak having a temporal abscissa dependent on a first delay TAUn of the acoustic path resulting from reflection from the corresponding wall n, with respect to the direct path,
- depending on each first delay TAUn, the first vector U0 and each second vector Un representing an acoustic path resulting from reflection from a wall n, at least one parameter among the following parameters is determined:

* the direction (DoA) of the direct path,
* the distance d0 from the source to the microphonic system, and
* at least one distance zn from the source to wall n.

8. Method according to Claim 7, wherein the peaks related to a reflection from a wall n have multiple temporal abscissae of the delay TAUn associated with this wall n.

9. Method according to either of Claims 7 and 8, wherein a first group of peaks at the lowest positive temporal abscissae is pre-selected, with a view to identifying in said group the peaks each associated with reflection from a wall.

10. Method according to one of the preceding claims, wherein the acquired signals are delivered in the form of successive frames of samples, and wherein:

   - for each frame, a score of presence of an audio attack in the frame is estimated (S18)(Eq.53), and
   - frames with scores above a threshold are selected (S22) with a view to determining said at least one parameter.

11. Method according to one of the preceding claims, wherein the signals acquired by the microphonic system take the form of a succession of samples, a weighting window the weighting of which varies so as to decrease exponentially over time being applied to said samples (FIG.5A).

12. Method according to one of the preceding claims, wherein a weighting q(f), each weighting being associated with a frequency band f, is applied iteratively (S7, S8, S9, S10, S11) to the velocity vector V(f) in the frequency domain, according to the following expression (Eq.49):

$$q(f) = \exp\left(- |lm(V(f)).m| / (\|\, lm(V(f)) \,\|)\right),$$

where lm(V(f)) is the imaginary part of the complex velocity vector and m is a unit vector normal to the plane defined by the vector U0 and a normal (z, FIG.1) to the wall.

13. Device for processing audio signals, comprising a processing circuit for implementing the method according to one of the preceding claims.

14. Computer program comprising instructions for implementing the method according to one of Claims 1 to 12, when said instructions are executed by a processor of a processing circuit.

FIG. 1

FIG. 2

25

FIG. 3A

FIG. 3B

## FIG. 4

signal et fenêtrage exp (attenuation x0,5 / 5ms)

temps (échantillons)

## FIG. 5A

FIG. 5B

empreinte temporelle (norme)

long terme sans fenêtrage

avec fenêtrage exponentiel
(en miroir pour la visualisation)

retard (échantillons)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **FELISBERTO et al.** Experimental Results of Underwater Cooperative Source Localization Using a Single Acoustic Vector Sensor. *SENSORS,* 12 Juillet 2013, vol. 13 (7